(19) Europäisches Patentamt
European Patent Office
Office européen des brevets

(11) EP 3 836 500 A1

(12) EUROPEAN PATENT APPLICATION
published in accordance with Art. 153(4) EPC

(43) Date of publication:
16.06.2021 Bulletin 2021/24

(51) Int Cl.:
H04L 27/00 (2006.01)   H04W 28/18 (2009.01)
H04W 52/26 (2009.01)   H04W 72/04 (2009.01)

(21) Application number: 18929512.4

(22) Date of filing: 09.08.2018

(86) International application number:
PCT/JP2018/030001

(87) International publication number:
WO 2020/031357 (13.02.2020 Gazette 2020/07)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(71) Applicant: NTT DoCoMo, Inc.
Tokyo 100-6150 (JP)

(72) Inventors:
• YOSHIOKA, Shohei
  Tokyo 100-6150 (JP)
• TAKEDA, Kazuki
  Tokyo 100-6150 (JP)
• NAGATA, Satoshi
  Tokyo 100-6150 (JP)

(74) Representative: Hoffmann Eitle
Patent- und Rechtsanwälte PartmbB
Arabellastraße 30
81925 München (DE)

(54) USER EQUIPMENT

(57) In order to appropriately control each use case even when a plurality of use cases having different requirements coexists in a radio communication system, a user terminal according to one aspect of the present disclosure has a transmitting section that performs UL transmission using at least one of a first modulation and coding scheme (MCS) table or a second MCS table in which a code rate lower than a minimum code rate specified in the first MCS table is specified, and a control section that separately controls transmission conditions for the UL transmission according to a type of an MCS table to be applied.

BASE STATION

·NOTIFICATION OF GIVEN MCS TABLE
·DCI TO WHICH GIVEN RNTI IS APPLIED

UE

APPLICATION OF FIRST TRANSMISSION/RECEPTION CONDITION/PARAMETER

APPLICATION OF SECOND TRANSMISSION/RECEPTION CONDITION/PARAMETER

FIG. 3

**Description**

Technical Field

The present disclosure relates to a user terminal in a next-generation mobile communication system.

Background Art

In the universal mobile telecommunications system (UMTS) network, the specifications of long-term evolution (LTE) have been drafted for the purpose of further increasing high speed data rates, providing lower delays and so on (see Non-Patent Literature 1). Further, the specifications of LTE Advanced (LTE-A, LTE Rel. 10, 11, 12, 13) have been made for the purpose of further increasing the capacity and advancement of LTE (LTE Rel. 8, 9).

Successor systems of LTE (for example, Future Radio Access (FRA), 5th generation mobile communication system (5G), 5G+ (plus), New Radio (NR), New radio access (NX), Future generation radio access (FX), LTE Rel. 14 or 15 or later versions) are also under study.

In the existing LTE system (for example, 3rd Generation Partnership Project (3GPP) Rel. 8-14), a user terminal (user equipment (UE)) controls reception of a downlink shared channel (for example, a physical downlink shared channel (PDSCH)) based on downlink control information (DCI, also referred to as DL assignment or the like) from a base station. Also, the UE controls transmission of a physical uplink shared channel (for example, a physical uplink shared channel (PUSCH)) based on the DCI (also referred to as UL grant or the like). The UE uses a given modulation and coding scheme (MCS) table to control reception of a PDSCH (or transmission of a PUSCH).

Further, the UE transmits channel state information (CSI) using a given channel quality indicator (CQI) table.

Citation List

Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

Summary of Invention

Technical Problem

Future radio communication systems (for example, 5G (5th generation mobile communication system) and NR (New Radio)) are expected to involve use cases such as further advancement of mobile broadband (enhanced mobile broadband (eMBB)), machine-type communication that achieves multiple simultaneous connections (massive machine type communications (mMTC)), and ultra-reliable and low-latency communications (URLLC), and the like. For example, the URLLC requires higher delay reduction than the eMBB and higher reliability than the eMBB.

In this manner, in the NR, various use cases with different requirements (for example, the eMBB, URLLC, and the like) are envisioned. However, in the specifications currently under consideration (for example, Rel. 15), many of transmitting/receiving operations of the eMBB and the URLLC are commonly specified. In this case, performance may not be sufficient for the URLLC, or performance may be excessive for the eMBB.

The present disclosure has been made in view of the above points, and one of objects thereof is to provide a user terminal capable of appropriately controlling each use case even when a plurality of use cases having different requirements coexists in a radio communication system.

Solution to Problem

A user terminal according to one aspect of the present disclosure has a transmitting section that performs uplink (UL) transmission using at least one of a first modulation and coding scheme (MCS) table or a second MCS table in which a code rate lower than a minimum code rate specified in the first MCS table is specified, and a control section that separately controls transmission conditions for the UL transmission according to a type of an MCS table to be applied.

Advantageous Effects of Invention

According to one aspect of the present disclosure, even when a plurality of use cases having different requirements coexists in a radio communication system, each use case can be appropriately controlled.

Brief Description of Drawings

Figs. 1A and 1B are diagrams illustrating examples of MCS tables 1, 2.
Fig. 2 is a diagram illustrating an example of an MCS table 3.
Fig. 3 is a diagram illustrating an example of transmission/reception control for every use case in the present embodiment.
Fig. 4 is a diagram illustrating an example of a schematic configuration of a radio communication system according to one embodiment.
Fig. 5 is a diagram illustrating an example of an overall configuration of a base station according to one embodiment.
Fig. 6 is a diagram illustrating an example of a functional configuration of the base station according to one embodiment.
Fig. 7 is a diagram illustrating an example of an overall configuration of a user terminal according to one embodiment.
Fig. 8 is a diagram illustrating an example of a functional configuration of the user terminal according to one embodiment.
Fig. 9 is a diagram illustrating an example of a hardware configuration of the base station and the user terminal according to one embodiment.

Description of Embodiments

In the NR, it is expected to introduce new MCS tables and CQI tables that are not specified in the existing LTE system in order to support various use cases. The new tables may have contents that specify candidates (indexes) having a lower code rate as compared to an existing table.

Further, upon introducing a new MCS table, it is conceivable to use a new RNTI (which may be called mcs-C-RNTI) to specify the new MCS table. An example of the MCS table and the RNTI newly introduced in the NR will be described below.

<MCS table>

It has been considered, in the NR, at least one of the modulation scheme (or modulation order) and code rate (modulation order or code rate) of a physically shared channel scheduled by DCI is controlled based on a given field included in the DCI. For example, a UE controls a reception process of a PDSCH based on a modulation and coding scheme (MCS) field included in the DCI (for example, DCI format 1_0, 1_1) that schedules the PDSCH.

Specifically, the UE receives the PDSCH based on a table (also called an MCS table) defined by associating an MCS index, a modulation order, and a code rate, and an MCS index specified by the DCI. Similarly, the UE transmits a PUSCH based on the MCS table and the MCS index specified by the DCI that schedules the PUSCH.

Each modulation order is a value corresponding to each modulation scheme. For example, a modulation order of quadrature phase shift keying (QPSK) corresponds to 2, a modulation order of 16QAM (quadrature amplitude modulation) corresponds to 4, a modulation order of 64QAM corresponds to 6, and a modulation order of 256QAM corresponds to 8.

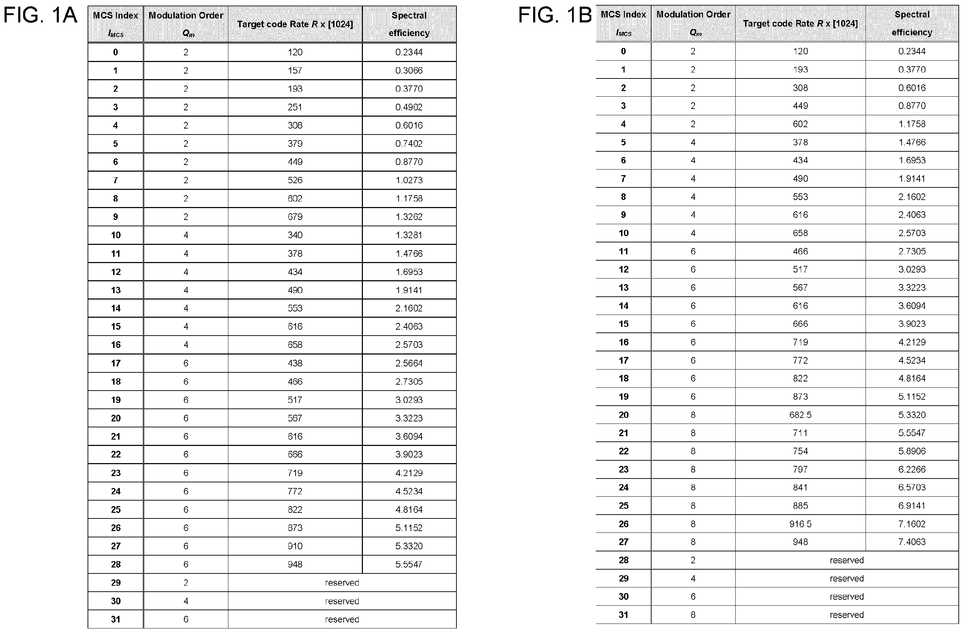

Fig. 1 is a diagram illustrating an example of the MCS table. Note that the values in the MCS table illustrated in Fig. 1 are merely examples and are not limited to these. Also, part of items associated with the MCS Index ($I_{MCS}$) (for example, spectral efficiency) may be omitted or other items may be added.

In Fig. 1A, QPSK, 16QAM, and 64QAM are specified as the modulation orders, and in Fig. 1B, QPSK, 16QAM, 64QAM, and 256QAM are specified as the modulation orders. Further, in Figs. 1A and 1B, the minimum code rate (MCS index 0) is defined to be 120 ($\times$ 1024).

The MCS table of Fig. 1A may be referred to as an MCS table 1, 64QAM table, or qam64 for PDSCH. The MCS table of Fig. 1B may be referred to as an MCS table 2, 256QAM table, or qam256 for PDSCH. Note that the 64QAM table and 256QAM table illustrated in Fig. 1 are also specified in the existing LTE system.

In the NR, there may be cases where lower latency and higher reliability are required than the existing LTE system (for example, the URLLC or the like). In order to deal with such cases, it is expected that a new MCS table different from the MCS table specified in the existing LTE system will be introduced.

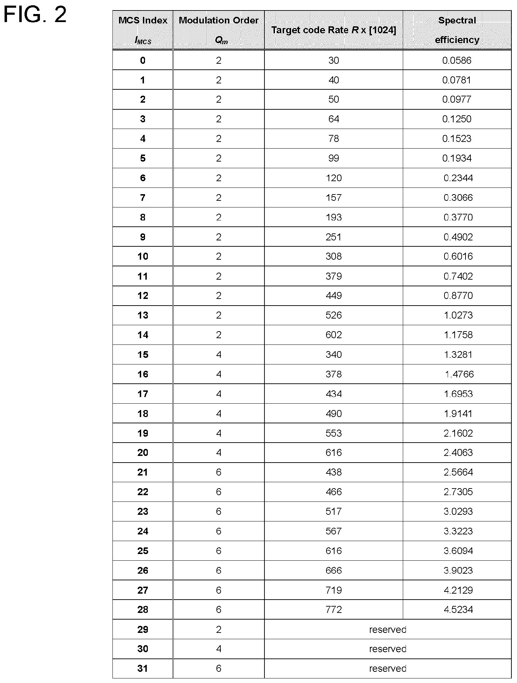

Fig. 2 illustrates an example of a new MCS table. Note that the values in the MCS table illustrated in Fig. 2 are merely examples and are not limited to these. In Fig. 2, QPSK, 16QAM, and 64QAM are defined as the modulation order, and the minimum code rate (MCS index 0) is defined to be 30 ($\times$ 1024). The MCS table in Fig. 2 may be referred to as an MCS table 3 for PDSCH, a new MCS table, or qam64LowSE.

As described above, the new MCS table (MCS table 3) may be a table in which a code rate (for example, 30) lower than the minimum code rate (for example, 120) specified in the MCS tables (MCS table 1, MCS table 2) illustrated in Fig. 1 is specified. Alternatively, the MCS table 3 may be a table in which the code rate at the same MCS index is set lower when compared with the MCS table 1 or the MCS table 2.

The UE may select the MCS table to be used for determining the modulation order/code rate of the PDSCH based on at least one of the following conditions (1) to (3) .

(1) Whether or not a given specified RNTI is configured
(2) Notification of information that specifies the MCS table (MCS table information)
(3) RNTI type applied to CRC scrambling of at least one of the DCI (or PDCCH) or the PDSCH

For example, it is assumed a case where a given RNTI (which may be called mcs-C-RNTI or new-RNTI) is not configured for the UE in a higher layer (for example, RRC signaling). In this case, the UE may determine the MCS table to be applied based on the MCS table information specified by a higher layer parameter (for example, mcs-table).

The MCS table information may be information that specifies one of the MCS table 1, the MCS table 2 (for example, qam256), or the MCS table 3 (for example, qam64LowSE). Alternatively, the MCS table information may be information that specifies one of the MCS table 2 (for example, qam256) or the MCS table 3 (for example, qam64LowSE).

The UE applies the MSC table 2 to control PDSCH reception when the MCS table 2 has been configured.

When the new MCS table (MCS table 3) has been configured, the UE may determine the MCS table to be applied based on a search space type used for transmitting the DCI. For example, the UE uses the MCS table 1 when the DCI (for example, DCI formats 0_0, 1_0) is transmitted in a common search space, even when the new MCS table has been configured. On the other hand, the UE uses the MCS table 3 when the new MCS table has been configured and the DCI (for example, DCI format 0_0, 1_0, 0_1, 1_0) has been transmitted in the UE-specific search space. Note that the MCS table may be configured separately for UL (PUSCH transmission) and DL (PDSCH reception).

Next, it is assumed that a case where the given RNTI used for selecting the MCS table is configured for the UE in a higher layer (for example, RRC signaling). In this case, the UE may determine the MCS table based on the RNTI type applied to at least one CRC scramble of the DCI (or PDCCH) and the PDSCH. For example, if CRC of the PDSCH is scrambled at a given RNTI, the UE will use the new MCS table (MCS table 3) to receive the PDSCH.

Further, with respect to a PDSCH transmitted by semi-persistent scheduling (DL-SPS), it may be notified by a higher layer parameter (for example, mcs-Table) of whether or not the new MCS table has been configured. The configuration of the new MCS table for DL-SPS may be configured independently of the PDSCH transmission (grant-based DL scheduling) based on the DCI.

Note that the conditions for using the table illustrated in Figs. 1 and 2 are not limited to the above conditions.

In this manner, the NR supports new MCS tables with lower code rates for various different use cases with different requirements (for example, the eMBB, the URLLC, and the like). On the other hand, in the specifications currently under consideration (for example, Rel. 15), many of the eMBB and URLLC transmitting/receiving operations are commonly specified. In this case, performance may not be sufficient for the URLLC, or performance may be excessive for the eMBB.

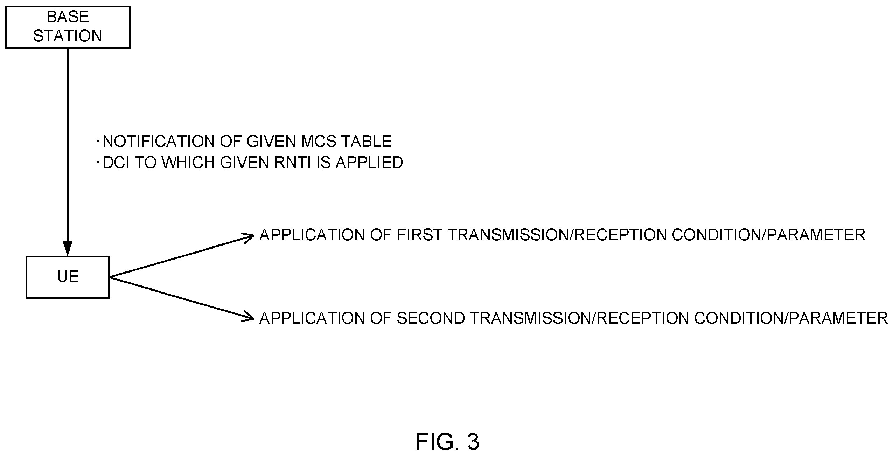

Accordingly, the present inventors have conceived control of at least one of a given UL transmission method or DL reception method by applying at least one of a transmission/reception condition or a parameter different for every use case with different requirements (see Fig. 3) .

For example, the UE selects a transmission/reception condition/parameter to be applied based on at least one of the MCS table type specified in the DCI, the RNTI type applied to CRC scrambling of the DCI (or PDCCH), or a resource type to be configured. Fig. 3 illustrates a case where there are two transmission/reception conditions/parameters, but the present invention is not limited to this, and the transmission/reception conditions/parameters may be three or more. The parameters have only to be any parameters to be applied to transmission/reception, and may be, for example, the higher layer parameter.

Now, an embodiment according to the present disclosure will be described in detail. Aspects according to the present embodiment may be applied individually or in combination. Note that in the following description, as a use case with different requirements, a first communication service (for example, eMBB) and a second communication service (for example, URLLC) will be described as an example, but use cases to which the present embodiment is applicable are not limited to this.

In the present specification, it may be assumed that at least one of DL transmission or UL transmission to which the new MCS table (for example, the MCS table 3) is applied is the URLLC. Alternatively, it may be assumed that at least one of DL transmission or UL transmission to which the existing MCS table (for example, the MCS table 1 or the MCS table 2) is applied is the eMBB.

For example, it may be assumed that in the UE the URLLC is applied to a UL channel or DL channel scheduled or triggered by the DCI that instructs the new MCS table. On the other hand, it may be assumed that the eMBB is applied to a UL or DL channel scheduled or triggered by the DCI that instructs the existing MCS table. The UL channel may be a PUCCH or a PUSCH and the DL channel may be a PDSCH.

Alternatively, it may be assumed that when the UE receives a CRC scrambled DCI (or PDCCH) at the given RNTI, the URLLC is applied to a UL channel or DL channel scheduled by the DCI. Alternatively, different DCIs (for example, DCI format) may be applied to the URLLC and the eMBB.

In the following description, the given RNTI may be referred to as MCS-RNTI, mcs-C-RNTI, URLLC-RNTI, U-RNTI, Y-RNTI, New-RNTI, or X-RNTI. That is, in the following description, the given RNTI may be replaced with at least one of MCS-RNTI, URLLC-RNTI, U-RNTI, Y-RNTI, or X-RNTI.

(First Aspect)

In a first aspect, UL transmission power is separately controlled for UL transmission of the first communication service (hereinafter, also referred to as eMBB) and UL transmission of the second communication service (hereinafter, also referred to as URLLC). The UL transmission may be at least one of the uplink control channel (for example, a PUCCH) or the uplink shared channel (for example, a PUSCH).

First, transmission power control of a PUCCH and a PUSCH will be described.

<Transmission power control for PUCCH>

In the NR, transmission power of a PUCCH is controlled based on a TPC command (also called value, increase-decrease value, correction value, or the like) indicated by the value of a given field (also called TPC command field, first field, or the like) in the DCI.

For example, transmission power of the PUCCH ($P_{\text{PUCCH}, b, f, c}(i, q_u, q_d, l)$) at a transmission occasion (also called transmission period or the like) i with respect to BWP b of carrier f of cell c using an index l of a power control adjustment state may be expressed by the following equation (1).

Here, the power control adjustment state may be configured by the higher layer parameter whether it has a plurality of states (for example, two states) or a single state. Also, when a plurality of power control adjustment states is configured, one of the plurality of power control adjustment states may be identified by the index l (for example, $l \in \{0, 1\}$). The power control adjustment state may be referred to as a PUCCH power control adjustment state, a first or second state, or the like.

Also, the PUCCH transmission occasion i is a given period during which a PUCCH is transmitted, and may be composed of, for example, one or more symbols, one or more slots, and the like.

[Equation 1]

$$P_{\text{PUCCH},b,f,c}(i,q_u,q_d,l) = \min \left\{ \begin{array}{l} P_{\text{CMAX},f,c}(i), \\ P_{\text{O\_PUCCH}b,f,c}(q_u) + 10\log_{10}(2^{\mu} \cdot M_{\text{RB},b,f,c}^{\text{PUCCH}}(i)) + PL_{b,f,c}(q_d) + \Delta_{\text{F\_PUCCH}}(F) + \Delta_{\text{TF},b,f,c}(i) + g_{b,f,c}(i,l) \end{array} \right\}$$

Equation (1)

In equation (1), $P_{\text{CMAX}, f, c}(i)$ is, for example, transmission power (also referred to as maximum transmission power or the like) of the user terminal configured for the carrier f of cell c in the transmission occasion i. $P_{\text{O\_PUCCH}, b, f, c}(q_u)$ is, for example, a parameter related to a target received power configured for the BWP b of the carrier f of cell c on the transmission occasion i (for example, a parameter related to a transmission power offset, a transmission power offset P0, or a target received power parameter, or the like).

$M_{\text{RB}, b, f, c}^{\text{PUCCH}}(i)$ is, for example, the number of resource blocks (bandwidth) allocated to a PUCCH for the transmission occasion i in the uplink BWP b of the carrier f of cell c and the subcarrier interval $\mu$. $PL_{b, f, c}(q_d)$ is, for example, a path-loss calculated at the user terminal using an index $q_d$ of the reference signal for the downlink BWP associated with the uplink BWP b of the carrier f of cell c.

$\Delta_{\text{F\_PUCCH}}(F)$ is a higher layer parameter given for every PUCCH format. $\Delta_{\text{TF}, b, f, c}(i)$ is a transmission power adjustment component (offset) for the uplink BWP b of the carrier f of cell c.

$g_{b, f, c}(i, l)$ is a value based on the TPC command of the power control adjustment state index l of the uplink BWP of the carrier f of cell c and the transmission occasion i (for example, a cumulative value of TPC command). For example, the cumulative value of TPC command may be expressed by equation (2).

[Equation 2]

$$g_{b,f,c}(i,l) = g_{b,f,c}(i_{last},l) + \delta_{PUCCH,b,f,c}(i_{last},i,K_{PUCCH},l)$$

Equation (2)

In equation (2), $\delta_{PUCCH, b, f, c}(i_{last}, i, K_{PUCCH}, l)$ may represent, for example, a TPC command indicated by a TPC command field value in the DCI (for example, DCI format 1_0 or 1_1) detected by the uplink BWP b of the carrier f of cell c for the transmission occasion i after the transmission occasion $i_{last}$ of the immediately preceding PUCCH, or may be a TPC command indicated by a TPC command field value in a (CRC scrambled) DCI (for example, DCI format 2_2) that has CRC parity bits to be scrambled with a specific radio network temporary identifier (RNTI) (for example, TPC-PUCCH-RNTI).

Note that equations (1) and (2) are merely examples and are not limited to these. The user terminal has only to control the transmission power of the PUCCH based on at least one parameter exemplified in equations (1) and (2) and may include an additional parameter, or a part of parameters may be omitted. Further, in above equations (1) and (2), the transmission power of the PUCCH is controlled for every BWP of a certain carrier in a certain cell, but is not limited to this. At least a part of the cell, the carrier, the BWP, and the power control adjustment state may be omitted.

<Transmission power control for PUSCH>

In the NR, transmission power of a PUSCH is controlled based on a TPC command (also called value, increase-decrease value, correction value, or the like) indicated by the value of a given field (also called TPC command field, first field, or the like) in the DCI.

For example, when the UE uses a parameter set (open loop parameter set) with index j and the index l of the power control adjustment state to transmit a PUSCH on the BWP b of the carrier f of cell c, the transmission power of the PUSCH ($P_{PUSCH, b, f, c}(i, j, q_d, l)$) on the PUSCH transmission occasion (also referred to as transmission period, or the like) i may be expressed by the following equation (3).

Here, the power control adjustment state may be configured by the higher layer parameter whether it has a plurality of states (for example, two states) or a single state. Also, when a plurality of power control adjustment states is configured, one of the plurality of power control adjustment states may be identified by the index l (for example, $l \in \{0, 1\}$). The power control adjustment state may be referred to as a PUSCH power control adjustment state, a first or second state, and the like.

Further, the PUSCH transmission occasion i is a given period during which a PUSCH is transmitted, and may be composed of, for example, one or more symbols, one or more slots, and the like.

[Equation 3]

$$P_{PUSCH,b,f,c}(i,j,q_d,l) = \min\begin{cases} P_{CMAX,f,c}(i), \\ P_{O\_PUSCH,b,f,c}(j) + 10\log_{10}(2^{\mu} \cdot M_{RB,b,f,c}^{PUSCH}(i)) + \alpha_{b,f,c}(j) \cdot PL_{b,f,c}(q_d) + \Delta_{TF,b,f,c}(i) + f_{b,f,c}(i,l) \end{cases}$$

Equation (3)

In equation (3), $P_{CMAX, f, c}(i)$ is, for example, transmission power (also referred to as maximum transmission power or the like) of the user terminal set for the carrier f of cell c in the transmission occasion i. $P_{O\_PUSCH, b, f, c}(j)$ is, for example, a parameter related to the target received power set for the BWP b of the carrier f of cell c on the transmission occasion i (for example, a parameter related to a transmission power offset, a transmission power offset P0, or a target received power parameter, or the like).

$M^{PUSCH}_{RB, b, f, c}(i)$ is, for example, the number of resource blocks (bandwidth) allocated to a PUSCH for the transmission occasion i in the uplink BWP b of the carrier f of cell c and the subcarrier interval $\mu$. $\alpha_{b, f, c}(j)$ is a value provided by the higher layer parameter (for example, also referred to as msg3-Alpha, p0-PUSCH-Alpha, fractional factors, or the like).

$PL_{b, f, c}(q_d)$ is, for example, a path-loss (path-loss compensation) calculated by the user terminal using the index $q_d$ of the reference signal for the downlink BWP associated with the uplink BWP b of the carrier f of cell c.

$\Delta_{TF, b, f, c}(i)$ is a transmission power adjustment component (offset, transmission format compensation) for the uplink BWP b of the carrier f of cell c.

$f_{b, f, c}(i, l)$ is a value based on the TPC command of the above power control adjustment state index l of the uplink BWP of the carrier f of cell c and the transmission occasion i (for example, the cumulative value of the TPC command, the value depending on the closed loop). For example, the cumulative value of the TPC command may be expressed by equation (4).

[Equation 4]

$$f_{b,f,c}(i,l) = f_{b,f,c}(i_{last},l) + \delta_{PUSCH,b,f,c}(i_{last},i,K_{PUSCH},l)$$

Equation (4)

In equation (4), $\delta_{PUSCH, b, f, c}(i_{last}, i, K_{PUSCH}, l)$ may represent, for example, a TPC command indicated by a TPC command field value in the DCI (for example, DCI format 0_0 or 0_1) detected by the uplink BWP b of the carrier f of cell c for the transmission occasion i after the transmission occasion $i_{last}$ of the immediately preceding PUSCH, or may be a TPC command indicated by a TPC command field value in a (CRC scrambled) DCI (for example, DCI format 2_2) that has CRC parity bits to be scrambled with a specific radio network temporary identifier (RNTI) (for example, TPC-PUSCH-RNTI).

Note that equations (3) and (4) are merely examples and are not limited thereto. The user terminal has only to control the transmission power of the PUSCH based on at least one parameter exemplified in equations (3) and (4) and may include an additional parameter, or a part of parameters may be omitted. Further, in above equations (3) and (4), the transmission power of the PUSCH is controlled for every BWP of a given carrier in a given cell, but is not limited to this. At least a part of the cell, the carrier, the BWP, and the power control adjustment state may be omitted.

In this manner, in the UL transmission power control of a PUCCH and the transmission power control of a PUSCH, the UL transmission power is controlled by accumulating TPC commands notified from a base station (for example, above equations (2) and (4), and the like).

The UE may control a TPC command for the eMBB and a TPC command for the URLLC separately (or independently). For example, the UE accumulates TPC commands separately for the eMBB and the URLLC. That is, accumulation or the like of TPC commands for the eMBB (for example, $g_{b, f, c}(i, l)$, $f_{b, f, c}(i, l)$) is applied within UL transmission of the eMBB, and accumulation or the like of TPC commands for the URLLC is applied within UL transmission of the URLLC.

Also, whether or not to apply a method of accumulating TPC commands separately for every communication service may be configured for the UE from the base station by using higher layer signaling (for example, SeparateTPCcommand).

It is assumed a case where the method of accumulating TPC commands separately is configured for every communication service, and UL transmission corresponding to the URLLC has been instructed. The UL transmission may be the PUCCH or the PUSCH. In this case, the UE independently accumulates TPC commands notified with respect to the UL transmission corresponding to the URLLC.

The case where the UL transmission corresponding to the URLLC is instructed may be at least one of a case where the new MCS table (for example, the MCS table 3) is specified by the DCI, a case where the CRC scrambled DCI is received at the given RNTI, or a case where the URLLC resource configured with the higher layer parameter is specified by the DCI.

When the UE is instructed to transmit the PUCCH corresponding to the URLLC, the UE accumulates TPC based on the expression ($g^{URLLC}_{b, f, c}(i, l)$) to be applied to accumulation of TPC commands for transmitting the PUCCH corresponding to the URLLC. Also, when the UE is instructed to transmit the PUSCH corresponding to the URLLC, the UE accumulates TPC based on the expression ($f^{URLLC}_{b, f, c}(i, i)$) to be applied to accumulation of TPC commands for transmitting the PUSCH corresponding to the URLLC.

In other cases (for example, when the UL transmission corresponding to the URLLC is not instructed), the UE accumulates TPC for the eMBB separately based on an expression ($g^{eMBB}_{b, f, c}(i, l)$) to be applied to accumulation of TPC commands for PUCCH transmission corresponding to the eMBB. Further, when PUSCH transmission corresponding to the eMBB is instructed, the UE accumulates TPC for the eMBB separately based on the expression ($f^{eMBB}_{b, f, c}(i, l)$) to be applied to accumulation of TPC commands for PUSCH transmission corresponding to the URLLC.

Further, when it is notified of a TPC command by the DCI that does not schedule (or trigger) DL or UL, the UE may perform control to add this TPC command to both the TPC command cumulative value ($g^{URLLC}_{b, f, c}(i, l)$ or $f^{URLLC}_{b, f, c}(i, l)$) for the URLLC and the cumulative value ($g^{eMBB}_{b, f, c}(i, l)$ or $f^{eMBB}_{b, f, c}(i, l)$) of the TPC command for the eMBB. Thus, when the UL transmission power for all services is changed, it can be controlled by using one DCI.

Alternatively, when it is notified of a TPC command by the DCI that does not schedule (or trigger) DL or UL, the UE may perform control to add this TPC command to one of the TPC command cumulative value for the URLLC and the cumulative value of the TPC command for the eMBB. In this case, the UE may determine which communication service TPC commands are accumulated for based on the RNTI or the higher layer parameter applied to this DCI.

Thus, by independently controlling application of the TPC command (for example, accumulation or the like) for every communication service (or services with different requirements), appropriate transmission power can be set for every communication service.

(Second Aspect)

In a second aspect, in UL transmission of the first communication service (hereinafter, also referred to as eMBB) and transmission of HARQ-ACK of the second communication service (hereinafter, also referred to as URLLC), a HARQ-ACK transmission process (for example, codebook generation or the like) is controlled separately.

<HARQ-ACK Codebook>

In the NR, it is expected that the UE determines a HARQ-ACK codebook (which may be referred to as HARQ-ACK size) semi-statically or dynamically. The base station may notify the UE of information indicating how to determine the HARQ-ACK codebook, for example, information indicating whether the HARQ-ACK codebook is semi-static or dynamic by higher layer signaling for every component carrier, every group (cell group (CG)), every PUCCH group, or every user terminal.

The HARQ-ACK codebook may be replaced with HARQ-ACK codebook of PDSCH, HARQ-ACK codebook size, HARQ-ACK bit number, and the like.

The UE may determine (generate) a HARQ-ACK information bit based on the determined HARQ-ACK codebook for every component carrier, every cell group, every PUCCH group, or every user terminal, and transmit the generated HARQ-ACK by using at least one of the uplink control channel (PUCCH) or the uplink shared channel (PUSCH).

When the UE is configured to determine the HARQ-ACK codebook semi-statically, or when the UE is configured with the HARQ-ACK codebook that is semi-static, this determination of the HARQ-ACK codebook may be called type-1 HARQ-ACK codebook determination. When the UE is configured to determine the HARQ-ACK codebook dynamically, or when the UE is configured with the HARQ-ACK codebook that is dynamic, this determination of the HARQ-ACK codebook may be called type-2 HARQ-ACK codebook determination.

The type-1 HARQ-ACK codebook and the semi-static HARQ-ACK codebook may be replaced interchangeably. The type-2 HARQ-ACK codebook and the dynamic HARQ-ACK codebook may be replaced interchangeably.

In the type-1 HARQ-ACK codebook determination, the UE may determine the number of HARQ-ACK bits and so on based on a configuration configured by higher layer signaling. The configured configuration may include, for example, downlink (DL) transmission scheduled over a range associated with feedback timing of HARQ-ACK, for example, a maximum or minimum number of PDSCHs, and the like.

This range is also referred to as a HARQ-ACK bundling window, a HARQ-ACK feedback window, a bundling window, a feedback window, and the like. The bundling window may correspond to at least one range of space, time, or frequency.

In the type-2 HARQ-ACK codebook determination, the UE may determine the number of HARQ-ACK bits or the like based on a bit sequence of a DL assignment index (downlink assignment index (DAI)) field included in the downlink control information, for example, the DL assignment. The DAI field may instruct at least one of a total DAI or a counter DAI.

The UE and the base station control may separately (or independently) control the HARQ-ACK codebook to be applied to HARQ-ACK transmission of the eMBB and the HARQ-ACK codebook to be applied to HARQ-ACK transmission of the URLLC.

For example, the base station separately configures the HARQ-ACK codebook to be applied to the HARQ-ACK transmission of the eMBB and the HARQ-ACK codebook to be applied to the HARQ-ACK transmission of the URLLC. For example, the HARQ-ACK codebook to be applied to the HARQ-ACK transmission of the eMBB may be type 1, and the HARQ-ACK codebook to be applied to the HARQ-ACK transmission of the URLLC may be type 2.

The UE separately generates the HARQ-ACK codebook to be applied to the HARQ-ACK transmission for the eMBB and the HARQ-ACK codebook to be applied to the HARQ-ACK transmission for the URLLC.

Further, whether or not to apply a method of generating the HARQ-ACK codebook separately for every communication service may be configured for the UE from the base station by using higher layer signaling (for example, SeparateHARQ-ACKcodebook).

It is assumed a case where a method of generating (or configuring) the HARQ-ACK codebook separately is configured for every communication service. When the UE receives the PDSCH, the UE transmits the HARQ-ACK for this PDSCH. In such a case, the HARQ-ACK transmission is performed in a slot (or PUCCH resource, symbol, or the like) specified by the DCI or the like that schedules the PDSCH. Further, the UE also generates a HARQ-ACK codebook in consideration of the HARQ-ACK transmitted in the same slot (or PUCCH resource, symbol, or the like).

In this case, when the UE receives the PDSCH corresponding to the URLLC, the UE generates the HARQ-ACK codebook for the URLLC and transmits the HARQ-ACK. On the other hand, when the PDSCH corresponding to the eMBB is received, the HARQ-ACK codebook for the eMBB is generated and the HARQ-ACK is transmitted.

The UE may determine a communication service supported by the HARQ-ACK based on at least one of the MCS table (MCS table 3 or MCS table 1 or 2) specified by the DCI that schedules the PDSCH, the RNTI (given RNTI or C-RNTI) used for CRC scrambling of the DCI that schedules a PDSCH, or the resource (URLLC resource or eMBB resource) specified by the DCI that schedules the PDSCH.

For example, when transmission of the HARQ-ACK corresponding to each PDSCH for a plurality of URLLCs is specified with the same slot, the same symbol (or overlapping symbol), or the same PUCCH resource, the UE generates the HARQ-ACK codebook for the URLLC.

Also, when transmission of the HARQ-ACK corresponding to each PDSCH for a plurality of eMBBs is specified with the same slot, the same symbol (or overlapping symbol), or the same PUCCH resource, the UE generates the HARQ-ACK codebook for the eMBB.

It is conceivable that slots (or PUCCH resources, symbols, or the like) for transmitting the HARQ-ACK for the PDSCH for the eMBB and the HARQ-ACK for the PDSCH for the URLLC overlap. In this case, the UE may generate a different HARQ-ACK codebook and then select a different resource (for example, a PUCCH resource) to perform transmission.

Thus, by independently controlling generation of the HARQ-ACK codebook for every communication service (or service with different requirements), appropriate HARQ-ACK transmission can be performed for every communication service.

(Third Aspect)

In a third aspect, a demodulation reference signal (for example, a DMRS) to be applied to the first communication service (hereinafter, also referred to as eMBB) and a configuration of DMRS to be applied to the second communication service (hereinafter, also referred to as URLLC) are controlled separately. The configuration of DMRS may be referred to as DMRS arrangement or DM-RS setting.

In the NR, for a DMRS used for a shared channel (PUSCH, PDSCH), a resource (resource element (RE)) mapping pattern is determined according to a DMRS type. For the UE, a DMRS configuration type for each channel may be configured from the base station using higher layer signaling.

The DMRS type is information indicating a mapping pattern for resource elements (RE) of DMRS. In the type 1, the DMRS is mapped with reference to a head symbol of the slot, whereas in the type 2, the DMRS is mapped with reference to a start symbol scheduled for the PDSCH. The DMRS type may be indicated by the higher layer parameter (for example, "dmrs-Type" included in "DMRS-DownlinkConfig").

The UE may determine that the DL (UL) DMRS is, for example, the type 2 if the RRC information element ("dmrs-Type" information element) is configured for DL (UL), or the type 1 if it is not configured.

Also, the number (or number and location) of DMRSs for shared channels may be determined by whether there is any additional DMRS. As information indicating the number or positions of additional DMRSs, the base station may notify the UE of position information of additional DMRSs indicating positions of DMRSs to be additionally mapped. The position information of the additional DMRSs may be indicated by a higher layer parameter (for example, "dmrs-AdditionalPosition" included in "DMRS-DownlinkConfig").

The UE and the base station may separately configure a DMRS configuration used for a shared channel of the eMBB or the like and a DMRS configuration used for a shared channel of the URLLC or the like. The configurations of DMRSs to be configured separately may be, for example, at least one of the DMRS type, number, or position.

For example, the base station configures the DMRS configuration of the eMBB and the DMRS configuration of the URLLC separately for the UE by using the higher layer. For example, the base station configures the DMRS configuration of the eMBB for the UE by using a given higher layer parameter (for example, DMRS-DownlinkConfig or DMRS-UplinkConfig). Also, the base station may configure the DMRS configuration of the URLLC for the UE by using a higher layer parameter different from the given higher layer parameter or another information element included in the given higher layer parameter.

Also, whether or not to apply a method of configuring the DMRS configuration separately for every communication service may be configured for the UE from the base station by using higher layer signaling (for example, SeparateDMRSconfig).

When the method of configuring the DMRS configuration separately for every communication service is configured, the UE separately controls the DMRS configuration to be applied for transmission/reception of the URLLC and the DMRS configuration to be applied for transmission/reception of the eMBB based on the DMRS configuration of every communication service configured from the base station.

The UE may select the DMRS configuration to be applied based on at least one of the MCS table (MCS table 3 or MCS table 1 or 2) specified by the DCI that schedules a shared channel, the RNTI (given RNTI or C-RNTI) used for CRC scrambling of the DCI that schedules a shared channel, or the resource (URLLC resource or eMBB resource) specified by the DCI that schedules a shared channel.

For example, when the shared channel supports the eMBB (for example, the MCS table 1 or 2, not applying a given RNTI, or not configuring a URLLC resource), the DMRS configuration to be configured with a first higher layer parameter (for example, DMRS-DownlinkConfig or DMRS-UplinkConfig). On the other hand, when the shared channel supports the URLLC (for example, MCS table 3, applying a given RNTI, or configuring a URLLC resource), the UE applies the DMRS configuration to be configured with a second higher layer parameter that is different from the first layer parameter.

Thus, by independently controlling the DMRS configuration of every communication service (or service with different requirements), appropriate transmission/reception can be performed for every communication service.

(Fourth Aspect)

In a fourth aspect, a phase noise correction reference signal (phase-tracking reference signal (PTRS)) to be applied to the first communication service (hereinafter, also referred to as eMBB) and a configuration of PTRS (also called PT-RS setting) to be applied to the second communication service (hereinafter, also referred to as URLLC) are controlled separately. The configuration of PTRS may be referred to as PTRS arrangement or PT-RS setting.

In the NR, a base station (for example, gNB) transmits a PTRS (Phase Tracking Reference Signal) on the downlink. The base station may transmit, for example, the PTRS mapped in one subcarrier continuously or non-continuously in a time direction. The base station may transmit the PTRS in at least a part of a period (such as slot or symbol) for transmitting a downlink shared channel (physical downlink shared channel (PDSCH)). The PTRS transmitted by the base station may be referred to as a DL PTRS.

Also, the UE transmits the phase tracking reference signal (PTRS) on the uplink. The UE may transmit, for example, the PTRS mapped in one subcarrier continuously or non-continuously in the time direction. The UE may transmit the PTRS in at least a part of a period (such as slot or symbol) for transmitting an uplink shared channel (physical uplink shared channel (PUSCH)). The PTRS transmitted by the UE may be referred to as UL PTRS. Hereinafter, the UL PTRS is simply referred to as PTRS.

The UE may determine whether or not the PTRS is on the uplink based on the configuration of higher layer signaling (for example, whether there is a PTRS-UplinkConfig information element). The UE may assume that the PTRS is in a resource block for the PUSCH. The base station may determine phase noise based on the PTRS transmitted from the UE and correct a phase error of a received signal.

The UE and the base station may separately configure the PTRS configuration used for the eMBB and the PTRS configuration used for the URLLC. The configuration of PTRS to be configured separately may be, for example, at least one of time/frequency-domain density or whether or not the PTRS is configured. For example, the time frequency density of one PTRS (for example, for the URLLC) may be configured to be higher than the time frequency density of the other (for example, for the eMBB) PTRS. Alternatively, a configuration may be employed in which one PTRS (for example, for the URLLC) is configured and the other PTRS (for example, for the eMBB) is not configured.

The base station may separately configure the PTRS configuration of the eMBB and the PTRS configuration of the URLLC for the UE by using a higher layer. For example, the base station configures the PTRS configuration of the eMBB for the UE by using a given higher layer parameter (for example, PTRS-DownlinkConfig or PTRS-UplinkConfig). Further, the base station may configure the PTRS configuration of the URLLC for the UE by using a higher layer parameter different from the given higher layer parameter or another information element included in the given higher layer parameter.

Further, whether or not to apply a method of configuring the PTRS configuration separately for every communication service may be configured for the UE from the base station by using higher layer signaling (for example, SeparatePTRSconfig).

When the method of configuring the PTRS configuration separately for every communication service is configured, the UE separately controls the PTRS configuration of the URLLC and the PTRS configuration of the eMBB based on the PTRS configuration of every communication service configured from the base station.

The UE may select the PTRS configuration to be applied based on at least one of the MCS table (MCS table 3 or MCS table 1 or 2) specified by the DCI that schedules a shared channel, the RNTI (given RNTI or C-RNTI) used for CRC scrambling of the DCI that schedules a shared channel, or the resource (URLLC resource or eMBB resource) specified by the DCI that schedules a shared channel.

For example, when supporting the URLLC (for example, MCS table 3, applying a given RNTI, or configuring a URLLC resource), the UE may control transmission or reception of the PTRS depending on whether or not a given higher layer parameter for the URLLC is configured. The given higher layer parameter may be, for example, "URLLCphaseTrackingRS" included in "DMRS-DownlinkConfig" or "DMRS-UplinkConfig", or "phaseTrackingRS" included in "URLLC-DMRS-DownlinkConfig" or "URLLC-DMRS-UplinkConfig". The UE may control not to transmit or receive the PTRS when the given higher layer parameter is not configured.

Further, when the given higher layer parameter for the URLLC is configured, the UE controls transmission or reception of the PTRS based on a higher layer parameter that is different from the higher layer parameter used for notification of the PTRS configuration of the eMBB (for example, PTRS-DownlinkConfig or PTRS-UplinkConfig, or frequencyDensity, timeDensity, or the like included in PTRS-DownlinkConfig or PTRS-UplinkConfig) used to notify the PTRS configuration of the eMBB).

Also, when supporting the eMBB (for example, MCS table 1 or 2, not applying given RNTI, or configuring an eMBB resource), the UE may control transmission or reception of the PTRS depending on whether or not a given higher layer parameter for the eMBB is configured. The given higher layer parameter for the eMBB may be, for example, "phaseTrackingRS" included in "DMRS-DownlinkConfig" or "DMRS-UplinkConfig". The UE may control not to transmit or receive the PTRS when the given higher layer parameter is not configured.

When the given higher layer parameter for the eMBB is configured, the UE controls transmission or reception of the PTRS based on a higher layer parameter (for example, PTRS-DownlinkConfig or PTRS-UplinkConfig) used for notification of the PTRS configuration of the eMBB.

Thus, by independently controlling the PTRS configuration of every communication service (or service with different requirements), appropriate transmission/reception can be performed for every communication service.

(Fifth Aspect)

In a fifth aspect, a PUCCH resource configured for the first communication service (hereinafter, also referred to as eMBB) and a PUCCH resource configured for the second communication service (hereinafter, also referred to as URLLC) are controlled separately. Note that the PUCCH resource may also be replaced with a PUCCH resource set.

<PUCCH resource>

In the NR, a set of one or more resources (PUCCH resources) for PUCCH may be configured by higher layer signaling.

For example, a set including one or more PUCCH resources (PUCCH resource set) may be configured by higher layer signaling for every partial bandwidth (bandwidth part (BWP)) configured in the CC.

Also, each PUCCH resource in the PUCCH resource set configured by higher layer signaling may be associated with each value of a given field (PUCCH resource indicator/indication (PRI) field, an ACK/NACK resource indicator (ARI) field, an ACK/NACK resource offset (ARO) field, or a second field, or the like) in DCI. The DCI may be a DCI (DL assignment, DCI format 1_0 or 1_1) used for scheduling of the PDSCH.

The UE determines a PUCCH resource to be used to transmit UCI based on a value of a PRI field in the DCI. The PRI field may be x bits (for example, x = 3). When the PUCCH resource set includes a PUCCH resource less than or equal to 2 to the x-th power (for example, 8 if x = 3), the user terminal may determine a PUCCH resource associated with the value of the PRI field for UCI transmission.

On the other hand, if the PUCCH resource set includes PUCCH resources that exceed 2 to the x-th power (for example, 8 if x = 3), the user terminal may determine a PUCCH resource for transmission of UCI based on other parameters, in addition to values in the PRI field (also called $\Delta_{PRI}$, PRI, ARI, ARO, or the like). The other parameters may include at least one of the following:

- The number ($N_{CCE,p}$) of control channel elements (CCE) in a control resource set (CORESET) p for receiving a downlink control channel (for example, physical downlink control channel (PDCCH)) that transmits DCI including the PRI field.
- Index ($n_{CCE,p}$, CCE index) of the CCE (for example, the first CCE) for receiving the downlink control channel.

Note that each PUCCH resource may include at least one of, for example, the number of symbols assigned to the PUCCH, a start index of symbols, a resource block assigned to the PUCCH (also referred to as a physical resource block (PRB) or the like), a start index of the resource block, whether or not to apply frequency hopping in a slot, a start index of PRB of a second hop when the frequency hopping is applied, or the like.

Further, each PUCCH resource is associated with the above PUCCH format, and may include an associated PUCCH format-specific resource (for example, initial cyclic shift of PF0, OCC in a time domain of PF1, OCC length of PF4, OCC index, or the like).

The UE and the base station may separately configure the PUCCH resource (or PUCCH resource set) used for the eMBB and the PUCCH resource (or PUCCH resource set) used for the URLLC.

For example, the base station configures the PUCCH resource for the eMBB and the PUCCH resource for the URLLC separately for the UE by using a higher layer. For example, the base station configures the PUCCH resource for the eMBB for the UE by using a given higher layer parameter (for example, PUCCH-ResourceSet included in PUCCH-Config or eMBB-PUCCH included in PUCCH-Resource). Further, the base station may configure the PUCCH resource for the URLLC for the UE by using a higher layer parameter different from the given higher layer parameter (for example, URLLC-PUCCH included in the PUCCH-Resource), or another information element included in the given higher layer parameter.

Further, whether or not to apply a method of configuring the PUCCH resource separately for every communication service may be configured for the UE from the base station by using higher layer signaling (for example, SeparatePUCCHresourceSet).

When the method of configuring the DMRS configuration separately for every communication service is configured, the UE separately controls the PUCCH resource to be applied to PUCCH transmission for the URLLC and the PUCCH resource to be applied to PUCCH transmission for the eMBB based on the PUCCH resource configuration of every communication service configured from the base station.

The UE may select the PUCCH resource to be applied based on at least one of the MCS table (MCS table 3 or MCS table 1 or 2) specified by the DCI that schedules a shared channel, the RNTI (given RNTI or C-RNTI) used for CRC scrambling of the DCI that schedules a shared channel, or the resource (URLLC resource or eMBB resource) specified by the DCI that schedules a shared channel.

For example, when transmitting a PUCCH corresponding to the URLLC (for example, MCS table 3, applying a given RNTI, or configuring a URLLC resource), the UE applies a PUCCH resource that is configured with a higher layer parameter different from the given higher layer parameter for the eMBB. On the other hand, when transmitting a PUCCH corresponding to the eMBB, the UE applies the DMRS configuration configured with the given higher layer parameter.

Further, the PUCCH resource set may not be configured for every communication service, and each PUCCH resource may be configured for every communication service. In this case, the UE may select and use a given PUCCH resource from the PUCCH resource set that is configured based on the communication service to be applied.

Thus, by independently controlling the PUCCH resource for every communication service (or a service with different requirements), the PUCCH resource can be flexibly configured for every communication service.

(Sixth Aspect)

In a sixth aspect, the number of repeated transmissions configured for the first communication service (hereinafter, also referred to as eMBB) and the number of repeated transmissions configured for the second communication service (hereinafter, also referred to as URLLC) are controlled separately. The number of repeated transmissions may be referred to as a repetition factor.

It has been discussed to transmit at least either a channel or a signal (channel/signal) in a repeated manner (repetition) in the NR. The channel/signal includes but not limited to, for example, PDSCH, PDCCH, PUSCH, PUCCH, DL-RS, and an uplink reference signal (UL-RS) or the like.

The number of repetitions is also referred to as a repetition factor K or an aggregation factor K. For example, the repetition factor K may be selected from a plurality of preset values (for example, 2, 4, 8, and the like). Also, an n-th repetition is also referred to as an n-th transmission occasion or the like and may be identified by a repetition index $k$ ($0 \leq k \leq K - 1$).

For example, the UE may receive information indicating the repetition factor K by higher layer layer signaling. The UE detects the DCI that schedules PDSCH that is repeatedly transmitted in a certain serving cell or a partial band (bandwidth part (BWP)) within the certain serving cell.

The UE may monitor a CORESET configured in a DL BWP (a set of one or more search spaces (SS set) associated with this CORESET or a PDCCH candidate constituting this SS set) so as to detect the DCI. The UE receives the PDSCH in K consecutive slots after a given duration from the slot in which the DCI is detected.

Specifically, the UE controls a PDSCH receiving process (for example, at least one of receiving, demapping, demodulation, or decoding) or a PUSCH transmitting process (for example, at least one of transmitting, mapping, modulation, or encoding) in the K consecutive slots on the basis of at least one of the following field values (or information indicating the field value) in the above DCI:

- the allocation of time-domain resource (such as the start symbol and the number of symbols in each slot, for example),
- the allocation of frequency-domain resource (for example, a given number of resource blocks (RB) or a given number of resource block groups (RBGs)),
- the modulation and coding scheme (MCS) index,
- the configuration of the demodulation reference signal (DMRS), or
- the state (TCI-state) of the transmission configuration indication or transmission configuration indicator (TCI).

The UE controls PDSCH reception in each of slots on the assumption that the time domain resource allocated to the PDSCH, the same frequency domain resource, the MCS index, and the DMRS configuration are the same throughout K consecutive slots that are configured in a semi-static (semi-static) manner by higher layer signaling. That is, the user terminal assumes that the field values in a single DCI apply to all K consecutive slots.

The UE and the base station may separately configure the repetition factor to be applied to the UL channel or DL channel of the eMBB and the repetition factor to be applied to the UL channel or DL channel of the URLLC. The UL channel may be at least one of PUSCH or PUCCH, and the DL channel may be at least one of PDSCH or PDCCH. For example, the number of candidates for the number of repeated transmissions specified in advance and the maximum value of the number of repeated transmissions may be specified separately for every communication service in the specifications.

For example, the base station configures the repetition factor for the eMBB and the repetition factor for the URLLC separately for the UE by using a higher layer. For example, the base station configures the repetition factor for the eMBB for the UE by using a given higher layer parameter (for example, repK, pucch-Repetition-F1-3-4, or pusch-RepetitionMultiSlots). Also, the base station may configure the repetition factor for the URLLC for the UE by using a higher layer parameter different from the given higher layer parameter or another information element included in the given higher layer parameter.

Further, whether or not to apply a method of configuring the repetition factor separately for every communication service may be configured for the UE from the base station by using higher layer signaling (for example, SeparatePUCCHresourceSet).

When the method of configuring the repetition factor separately for every communication service (or for every channel type of communication service) is configured, the UE controls the repetition factor to be applied to the URLLC and the repetition factor to be applied to the eMBB separately based on the repetition factor for every communication service configured from the base station.

The UE may select the repetition factor to apply based on at least one of the MCS table specified by the DCI (MCS table 3 or MCS table 1 or 2), the RNTI used for CRC scrambling of the DCI (given RNTI or C-RNTI), or the resource (URLLC resource or eMBB resource) specified by the DCI that schedules the shared channel.

For example, the UE applies the repetition factor configured with the first higher layer parameter when the MCS table 1 or 2 is specified in the DCI, when the given RNTI is not applied to the DCI, or when the URLLC resource is not specified. On the other hand, the UE applies the repetition factor configured with the second higher layer parameter when the MCS table 3 is specified in the DCI, when the given RNTI is applied to the DCI, or when the URLLC resource is specified.

Thus, the UE separately controls the transmission operation or the reception operation described in the first aspect to the sixth aspect for every communication service type (or the MCS table type, the RNTI type, the resource type to be configured, or the like). For example, the UE may apply conditions configured with respective different higher layer parameters for every communication service type.

Thus, by independently controlling the repetition factor for every communication service (or service with different requirements), it is possible to flexibly control the repetition transmission for every communication service.

(Radio communication system)

Now, a configuration of a radio communication system according to the embodiment of the present disclosure will be described below. In this radio communication system, communication is performed using at least one of or a combination of the radio communication methods described in the embodiments described above.

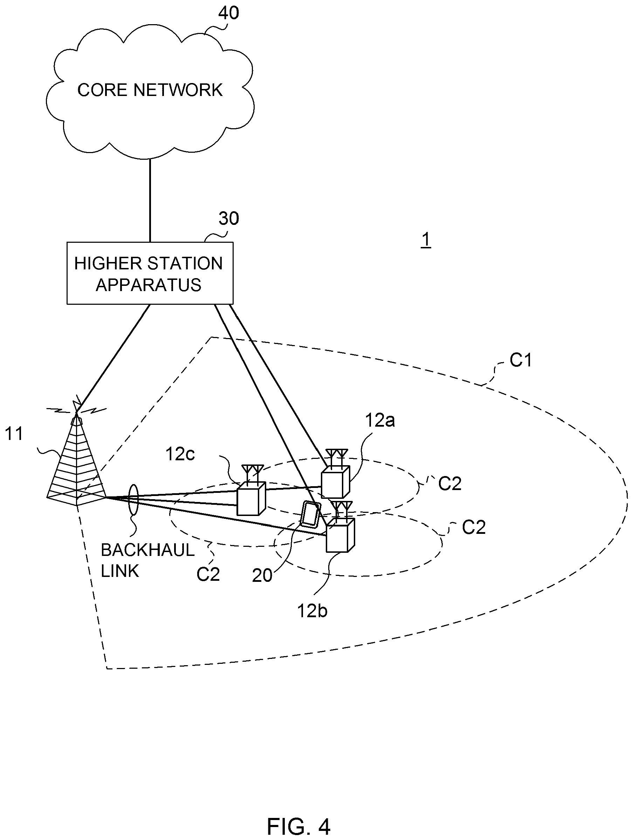

Fig. 4 is a diagram illustrating an example of a schematic configuration of a radio communication system according to one embodiment. A radio communication system 1 can employ carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "Long Term Evolution (LTE)", "LTE-Advanced (LTE-A)", "LTE-Beyond (LTE-B)", "SUPER 3G", "IMT-Advanced", "4th generation mobile communication system (4G)", "5th generation mobile communication system (5G)", "New Radio (NR)", "Future Radio Access (FRA)", "New Radio Access Technology (New-RAT)", and so on, or may be referred to as a system to implement these.

Further, the radio communication system 1 may support dual connectivity (multi-RAT dual connectivity (MR-DC)) among a plurality of RATs (Radio Access Technologies). The MR-DC may include dual connectivity between LTE and NR in which a base station (eNB) of the LTE (E-UTRA) becomes a master node (MN) and a base station (gNB) of the NR becomes a secondary node (SN) (E-UTRA-NR Dual Connectivity (EN-DC)), dual connectivity between NR and LTE in which a base station (gNB) of the NR becomes an MN and a base station (eNB) of the LTE (E-UTRA) becomes an SN (NR-E-UTRA Dual Connectivity (NE-DC)) and the like.

The radio communication system 1 includes a base station 11 that forms a macro cell C1 covering a relatively wide coverage, and base stations 12 (12a to 12c) that are arranged within the macro cell C1 and form small cells C2 that are narrower than the macro cell C1. Also, a user terminal 20 is placed in the macro cell C1 and in each small cell C2. The arrangement, number and so on of cells and the user terminal 20 are not limited to aspects illustrated in the drawings.

The user terminal 20 can connect with both the base station 11 and the base stations 12. It is assumed that the user terminal 20 uses the macro cell C1 and the small cells C2 at the same time using CA or DC. Further, the user terminal 20 may apply CA or DC using a plurality of cells (CCs) (for example, five or fewer CCs or six or more CCs).

Between the user terminal 20 and the base station 11, communication can be carried out using a carrier of a relatively low frequency band (for example, 2 GHz) and a narrow bandwidth (referred to as an "existing carrier", a "legacy carrier" and so on). Meanwhile, between the user terminal 20 and the base stations 12, a carrier of a relatively high frequency band (for example, 3.5 GHz, 5 GHz and so on) and a wide bandwidth may be used, or the same carrier as that used in the base station 11 may be used. Note that the structure of the frequency band for use in each base station is by no means limited to these.

Also, the user terminal 20 can perform communication in each cell using time division duplex (TDD) and/or frequency division duplex (FDD). Further, in each cell (carrier), a single numerology may be applied, or a plurality of different numerologies may be applied.

The numerology may be a communication parameter applied to transmission and/or reception of a signal and/or channel, and may indicate, for example, at least one of subcarrier interval, bandwidth, symbol length, cyclic prefix length, subframe length, TTI length, number of symbols per TTI, radio frame configuration, specific filtering processing performed by a transceiver in a frequency domain, specific windowing processing performed by a transceiver in a time domain, or the like.

For example, for a certain physical channel, when the subcarrier interval of the constituent OFDM symbols is different and/or the number of OFDM symbols is different, it may be regarded that the numerology is different.

The base station 11 and the base station 12 (or between two base stations 12) may be connected by wire (for example, an optical fiber, an X2 interface, and so on in compliance with the common public radio interface (CPRI)) or wirelessly.

The base station 11 and the base stations 12 are each connected with higher station apparatus 30, and are connected with a core network 40 via the higher station apparatus 30. Note that the higher station apparatus 30 may be, for example, an access gateway apparatus, a radio network controller (RNC), a mobility management entity (MME), and so on, but is by no means limited to these. Also, each base station 12 may be connected with the higher station apparatus 30 via the base station 11.

Note that the base station 11 is a base station having a relatively wide coverage, and may be referred to as a "macro base station", an "aggregate node", an "eNB (eNodeB)", a "transmission/reception point" and so on. Also, the base stations 12 are base stations having local coverages, and may be referred to as "small base stations", "micro base stations", "pico base stations", "Femto base stations", "HeNBs (Home eNodeBs)", "RRHs (Remote Radio Heads)", "transmission/reception points" and so on. Hereinafter, the base stations 11 and 12 will be collectively referred to as "base stations 10", unless these are distinguished from each other.

Each user terminal 20 is terminal to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and other radio access schemes may be used as well.

In the radio communication system 1, a downlink shared channel (physical downlink shared channel (PDSCH)), which is used by each user terminal 20 on a shared basis, a broadcast channel (physical broadcast channel (PBCH)), downlink L1/L2 control channels and so on are used as downlink channels. User data, higher layer control information, and a system information block (SIB) and so on are transmitted by the PDSCH. Further, a master information block (MIB) is transmitted by the PBCH.

The downlink L1/L2 control channels include at least one of a downlink control channel (physical downlink control channel (PDCCH) and/or an enhanced physical downlink control channel (EPDCCH)), a physical control format indicator channel (PCFICH), or a physical hybrid-ARQ indicator channel (PHICH). Downlink control information (DCI) including scheduling information of PDSCH and/or PUSCH, or the like is transmitted by the PDCCH.

Note that scheduling information may be reported via DCI. For example, the DCI to schedule reception of DL data may be referred to as "DL assignment", and the DCI to schedule transmission of UL data may be referred to as "UL grant".

The number of OFDM symbols for use in PDCCH is transmitted by PCFICH. HARQ (Hybrid Automatic Repeat reQuest) delivery acknowledgement information (also referred to as, for example, "retransmission control information", "HARQ-ACKs", "ACK/NACKs", and so on) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (physical uplink shared channel (PUSCH)), which is used by each user terminal 20 on a shared basis, an uplink control channel (physical uplink control channel (PUCCH)), a random access channel (physical random access channel (PRACH)) and so on are used as uplink channels. User data, higher layer control information, and so on are transmitted by the PUSCH. Also, downlink radio link quality information (channel quality indicator (CQI)), delivery acknowledgement information, scheduling request (SR), and so on are transmitted by the PUCCH. By means of PRACH, random access preambles for establishing connections with cells are transmitted.

In the radio communication systems 1, a cell-specific reference signal (CRS), a channel state information reference signal (CSI-RS), a demodulation reference signal (DMRS), a positioning reference signal (PRSs), and so on are transmitted as downlink reference signals. Also, in the radio communication system 1, a measurement reference signal (sounding reference signal (SRS)), a demodulation reference signal (DMRS), and so on are transmitted as uplink reference signals. Note that the DMRS may be referred to as a "user terminal-specific reference signal (UE-specific Reference Signal)". Also, reference signals to be transmitted are by no means limited to these.

<Base Station>

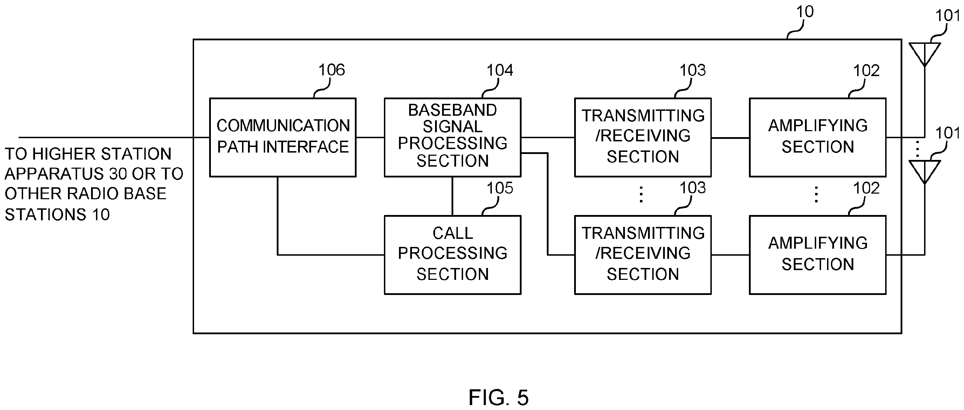

Fig. 5 is a diagram illustrating an example of an overall configuration of a base station according to one embodiment. A base station 10 has a plurality of transmitting/receiving antennas 101, amplifying sections 102, transmitting/receiving sections 103, a baseband signal processing section 104, a call processing section 105 and a communication path interface 106. Note that it is sufficient as long as one or more of each of the transmitting/receiving antennas 101, amplifying sections 102, and the transmitting/receiving sections 103 are provided.

User data to be transmitted from the base station 10 to the user terminal 20 on the downlink is input from the higher station apparatus 30 to the baseband signal processing section 104, via the communication path interface 106.

In the baseband signal processing section 104, the user data is subjected to transmission processing, including packet data convergence protocol (PDCP) layer processing, division and coupling of the user data, radio link control (RLC) layer transmission processing such as RLC retransmission control, medium access control (MAC) retransmission control (for example, a hybrid automatic repeat request (HARQ) transmission processing), scheduling, transport format selection, channel coding, inverse fast Fourier transform (IFFT) processing, and precoding processing, and the result is forwarded to each transmitting/receiving section 103. Furthermore, downlink control signals are also subjected to transmission processing such as channel coding and an inverse fast Fourier transform, and forwarded to the transmitting/receiving sections 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving section 103 can be constituted by a transmitter/receiver, a transmitting/receiving circuit or transmitting/receiving device that can be described based on general understanding of the technical field to which the present disclosure pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to fast Fourier transform (FFT) processing, inverse discrete Fourier transform (IDFT) processing, error correction decoding, MAC retransmission control receiving processing, and RLC layer and PDCP layer receiving processing, and forwarded to the higher station apparatus 30 via the communication path interface 106. The call processing section 105 performs call processing (such as configuring and releasing) of communication channels, manages the state of the base stations 10 and manages the radio resources.

The communication path interface 106 transmits and receives signals to and from the higher station apparatus 30 via a given interface. Also, the communication path interface 106 may transmit and receive signals (backhaul signaling) with other base stations 10 via an inter-base station interface (which is, for example, optical fiber that is in compliance with the CPRI (Common Public Radio Interface), the X2 interface, and the like).

Note that the transmitting/receiving section 103 may further include an analog beamforming unit that performs analog beamforming. The analog beamforming unit can be constituted by an analog beamforming circuit (for example, a phase shifter, a phase shift circuit) or analog beamforming device (for example, a phase shifter) described based on general understanding of the technical field to which the present disclosure pertains. Also, the transmitting/receiving antenna 101 can be constituted by an array antenna, for example. Also, the transmitting/receiving section 103 may be configured such that a single BF and a multi BF can be applied.

The transmitting/receiving section 103 may transmit a signal using a transmission beam and may receive a signal using a reception beam. The transmitting/receiving section 103 may transmit and/or receive a signal using a given beam determined by the control section 301.

The transmitting/receiving section 103 may receive and/or transmit various types of information described in the above-described embodiments from/to the user terminal 20.

For example, the transmitting/receiving section 103 receives a UL signal or channel that is transmitted using at least one of the first modulation and coding scheme (MCS) table or the second MCS table having a code rate lower than the minimum code rate specified in the first MCS table. Further, the transmitting/receiving section 103 may transmit downlink control information including information regarding the MCS table.

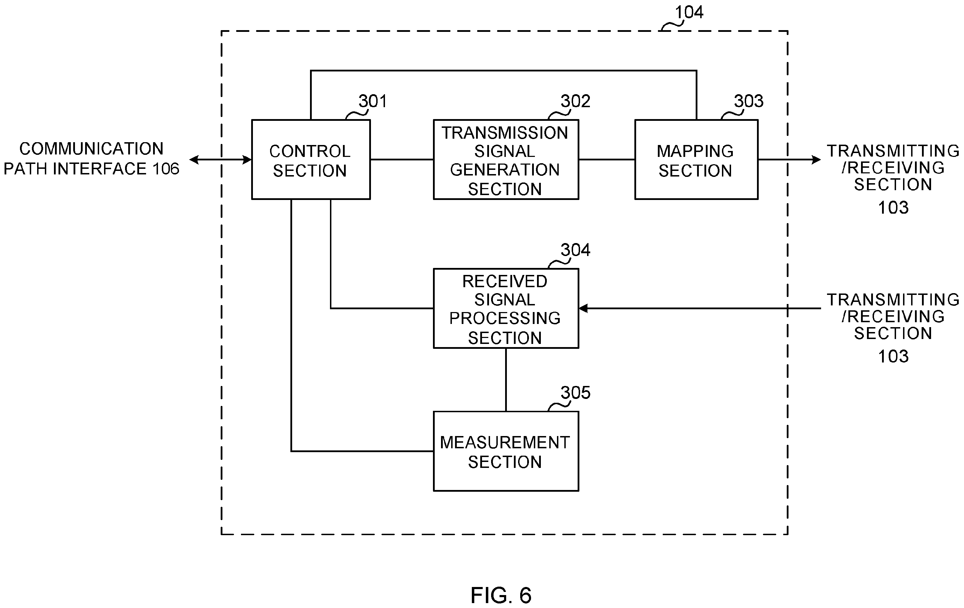

Fig. 6 is a diagram illustrating an example of a functional configuration of the base station according to one embodiment. Note that, although this example will primarily illustrate functional blocks that pertain to characteristic parts of the present embodiment, it may be assumed that the base station 10 has other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the base station 10, and some or all of these configurations may not be included in the baseband signal processing section 104.

The control section (scheduler) 301 controls the whole of the base station 10. The control section 301 can be constituted by a controller, a control circuit, or control device that can be described based on general understanding of the technical field to which the present disclosure pertains.

For example, the control section 301 controls the generation of signals in the transmission signal generation section 302, the allocation of signals in the mapping section 303, and the like. Further, the control section 301 controls the signal receiving processing in the received signal processing section 304, the measurements of signals in the measurement section 305, and so on.

The control section 301 controls the scheduling (for example, resource allocation) of system information, downlink data signals (for example, signals transmitted in the PDSCH), and downlink control signals (for example, signals that are transmitted in the PDCCH and/or the EPDCCH, delivery acknowledgement information, or the like). Further, the control section 301 controls the generation of downlink control signals, downlink data signals and so on, based on the results of determining whether or not retransmission control is necessary for uplink data signals, and so on.

The control section 301 controls scheduling of synchronization signals (for example, PSS/SSS), downlink reference signals (for example, CRS, CSI-RS, DMRS), and so on.

The control section 301 may use digital BF (for example, precoding) by the baseband signal processing section 104 and/or analog BF (for example, phase rotation) by the transmitting/receiving sections 103 to form a transmission beam and/or a reception beam.

The control section 301 separately controls the transmission operation or the reception operation described in the first aspect to the sixth aspect for every communication service type (or the MCS table type, the RNTI type, the resource type to be configured, or the like). For example, different higher layer parameters may be configured for every communication service type.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit, or a signal generation device that can be described based on general understanding of the technical field to which the present disclosure pertains.

For example, the transmission signal generation section 302 generates DL assignments, which report downlink data allocation information, and/or UL grants, which report uplink data allocation information, based on commands from the control section 301. DL assignments and UL grants are both DCI, and follow the DCI format. Also, the downlink data signals are subjected to the coding processing, the modulation processing, and so on, by using code rates and modulation schemes that are determined based on, for example, channel state information (CSI) reported from each user terminal 20.

The mapping section 303 maps the downlink signals generated in the transmission signal generation section 302 to given radio resources based on commands from the control section 301, and outputs these to the transmitting/receiving sections 103. The mapping section 303 can be constituted by a mapper, a mapping circuit, or a mapping device that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminal 20 (uplink control signals, uplink data signals, uplink reference signals, and so on). The received signal processing section 304 can be constituted by a signal processor, a signal processing circuit, or a signal processing device that can be described based on general understanding of the technical field to which the present disclosure pertains.

The received signal processing section 304 outputs, to the control section 301, information decoded by the receiving processing. For example, when a PUCCH including an HARQ-ACK is received, the received signal processing section 304 outputs this HARQ-ACK to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit, or a measurement device that can be described based on general understanding of the technical field to which the present disclosure pertains.

For example, the measurement section 305 may perform RRM (Radio Resource Management) measurements, CSI (Channel State Information) measurements and so on, based on the received signals. The measurement section 305 may measure the received power (for example, reference signal received power (RSRP)), the received quality (for example, reference signal received quality (RSRQ), signal to interference plus noise ratio (SINR), signal to noise ratio (SNR)), the signal strength (for example, received signal strength indicator (RSSI)), the transmission path information (for example, CSI), and so on. The measurement results may be output to the control section 301.

<User terminal>

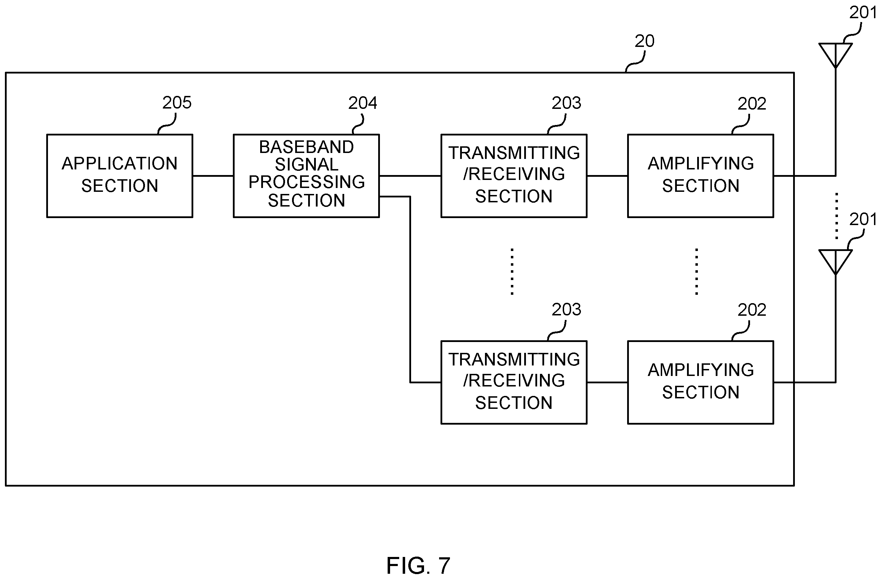

Fig. 7 is a diagram illustrating an example of an overall configuration of a user terminal according to one embodiment. The user terminal 20 includes a plurality of transmitting/receiving antennas 201, amplifying sections 202, and transmitting/receiving sections 203, a baseband signal processing section 204, and an application section 205. Note that it is sufficient as long as one or more of each of the transmitting/receiving antennas 201, the amplifying sections 202, and the transmitting/receiving sections 203 are provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. The transmitting/receiving section 203 can be constituted by a transmitter/receiver, a transmitting/receiving circuit or transmitting/receiving device that can be described based on general understanding of the technical field to which the present disclosure pertains. Note that a transmitting/receiving section 203 may be structured as a transmitting/receiving section in one entity, or may be constituted by a transmitting section and a receiving section.

The baseband signal processing section 204 performs receiving processes for the baseband signal that is input, including an FFT process, error correction decoding, a retransmission control receiving process, and so on. Downlink user data is forwarded to the application section 205. The application section 205 performs processes related to higher layers above the physical layer and the MAC layer, and so on. Also, in the downlink data, the broadcast information may be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

Baseband signals that are output from the baseband signal processing section 204 are converted into a radio frequency band in the transmitting/receiving sections 203 and transmitted. The radio frequency signals having been subjected to frequency conversion in the transmitting/receiving sections 203 are amplified in the amplifying sections 202, and transmitted from the transmitting/receiving antennas 201.

Note that the transmitting/receiving section 203 may further include an analog beamforming unit that performs analog beamforming. The analog beamforming unit can be constituted by an analog beamforming circuit (for example, a phase shifter, a phase shift circuit) or analog beamforming device (for example, a phase shifter) described based on general understanding of the technical field to which the present disclosure pertains. Also, the transmitting/receiving antenna 201 can be constituted by an array antenna, for example. Also, the transmitting/receiving section 203 is configured such that a single BF and a multi BF may be used.

The transmitting/receiving section 203 performs UL transmission or DL reception using at least one of the first modulation and coding scheme (MCS) table or the second MCS table having a code rate lower than the minimum code rate specified in the first MCS table.

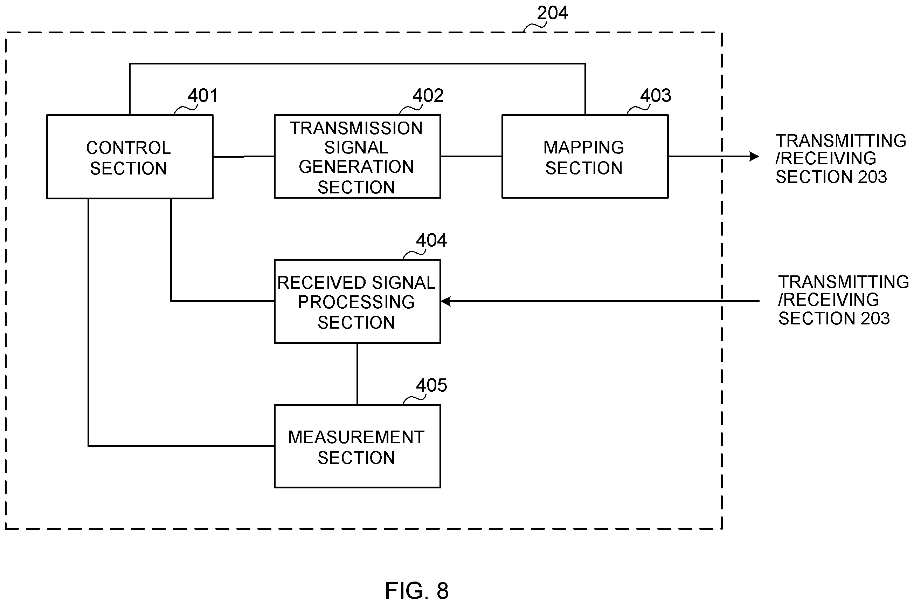

Fig. 8 is a diagram illustrating an example of a functional structure of a user terminal according to one embodiment. Note that, although this example will primarily illustrate functional blocks that pertain to characteristic parts of the present embodiment, it may be assumed that the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404, and a measurement section 405. Note that these configurations have only to be included in the user terminal 20, and some or all of the configurations need not be included in the baseband signal processing section 204.

The control section 401 controls the whole of the user terminal 20. The control section 401 can be constituted by a controller, a control circuit, or control device that can be described based on general understanding of the technical field to which the present disclosure pertains.

The control section 401, for example, controls the generation of signals in the transmission signal generation section 402, the allocation of signals in the mapping section 403, and so on. Further, the control section 401 controls the signal receiving processing in the received signal processing section 404, the measurements of signals in the measurement section 405, and so on.

The control section 401 acquires the downlink control signals and downlink data signals transmitted from the base station 10, via the received signal processing section 404. The control section 401 controls the generation of uplink control signals and/or uplink data signals based on the results of determining whether or not retransmission control is necessary for the downlink control signals and/or downlink data signals, and so on.

The control section 401 may use digital BF (for example, precoding) by the baseband signal processing section 204 and/or analog BF (for example, phase rotation) by the transmitting/receiving sections 203 to form a transmission beam and/or a reception beam.

Further, the control section 401 separately controls the transmission conditions/parameters of UL transmission or the reception conditions/parameters of DL reception according to the type of the MCS table to be applied.

For example, the control section 401 may separately control accumulation of transmission power control commands according to the type of the MCS table to be applied. Further, the control section 401 may separately generate a codebook used for transmitting the delivery acknowledgement signal according to the type of the MCS table to be applied. Further, the control section 401 may separately control arrangement of the reference signal according to the type of the MCS table to be applied. Further, the control section 401 may control selection of the resource of the uplink control channel according to the type of the MCS table to be applied. Further, the control section 401 may separately control the number of repetitions of UL transmission according to the type of the MCS table to be applied.

Further, the control section 401 separately controls the transmission operation or the reception operation described in the first aspect to the sixth aspect for every communication service type (or the MCS table type, the RNTI type, the resource type to be configured, or the like). For example, conditions configured by higher layer parameters different for every communication service type may be applied.

The transmission signal generation section 402 generates uplink signals (uplink control signals, uplink data signals, uplink reference signals, and the like) based on commands from the control section 401, and outputs these signals to the mapping section 403. The transmission signal generation section 402 can be constituted by a signal generator, a signal generating circuit, or a signal generation device that can be described based on general understanding of the technical field to which the present disclosure pertains.

For example, the transmission signal generation section 402 generates uplink control signals such as delivery acknowledgement information, channel state information (CSI), and so on, based on commands from the control section 401. Also, the transmission signal generation section 402 generates uplink data signals based on instructions from the control section 401. For example, when a UL grant is included in a downlink control signal that is reported from the base station 10, the control section 401 instructs the transmission signal generation section 402 to generate an uplink data signal.

The mapping section 403 maps the uplink signals generated in the transmission signal generation section 402 to radio resources based on commands from the control section 401, and output the result to the transmitting/receiving section 203. The mapping section 403 can be constituted by a mapper, a mapping circuit, or a mapping device that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals, and so on) that are transmitted from the base station 10. The received signal processing section 404 can be constituted by a signal processor, a signal processing circuit, or a signal processing device that can be described based on general understanding of the technical field to which the present disclosure pertains. Also, the received signal processing section 404 can constitute the receiving section according to the present disclosure.

The received signal processing section 404 outputs the decoded information that is acquired through the receiving processing to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit, or a measurement device that can be described based on general understanding of the technical field to which the present disclosure pertains.

For example, the measurement section 405 may perform RRM measurements, CSI measurements, and so on based on the received signals. The measurement section 405 may measure the received power (for example, RSRP), the received quality (for example, RSRQ, SINR, SNR), the signal strength (for example, RSSI), transmission path information (for example, CSI), and so on. The measurement results may be output to the control section 401.

The transmitting/receiving section 203 may transmit BFRQ, PBFRQ, or the like to the base station 10.

(Hardware Configuration)

Note that the block diagrams that have been used to describe the above embodiments illustrate blocks in functional units. These functional blocks (configuration units) may be implemented in arbitrary combinations of at least one of hardware or software. Also, the method for implementing each functional block is not particularly limited. That is, each functional block may be achieved by a single device physically or logically aggregated, or may be achieved by directly or indirectly connecting two or more physically or logically separate devices (using wires, radio, or the like, for example) and using these plural devices. The functional block may be achieved by combining the one device or the plurality of devices with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and so on. For example, a functional block (configuration unit) that causes transmission to function may be referred to as a transmitting section/section, a transmitter, or the like. In any case, as described above, the implementation method is not particularly limited.

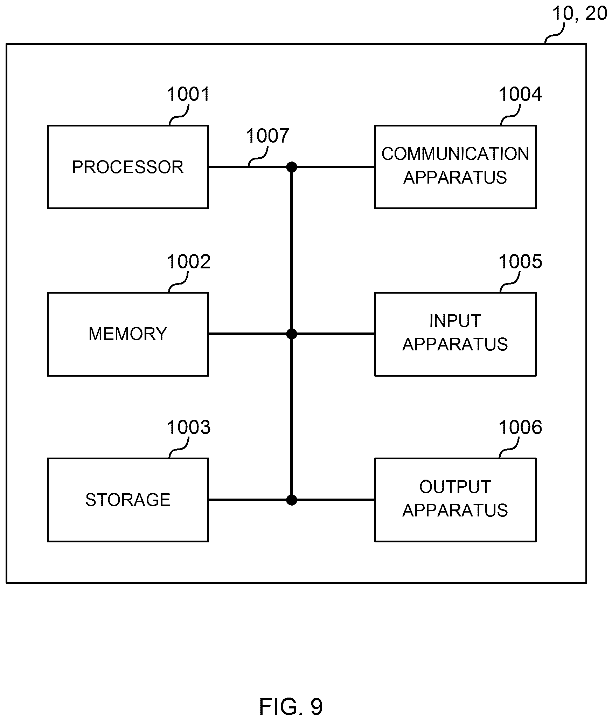

For example, the base station, the user terminal, and so on according to one embodiment of the present disclosure may function as a computer that executes the processing of the radio communication method of the present disclosure. Fig. 9 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" can be replaced with "circuit", "device", "unit", and so on. The hardware configuration of the base station 10 and the user terminal 20 may be designed to include one or more of the apparatuses illustrated in the drawings, or may be designed not to include some apparatuses.

For example, although only one processor 1001 is illustrated, a plurality of processors may be provided. Furthermore, processes may be implemented with one processor, or processes may be implemented in sequence, or in different manners, on two or more processors. Note that the processor 1001 may be implemented with one or more chips.

Each function of the base station 10 and the user terminal 20 is implemented by, for example, reading given software (program) into hardware such as the processor 1001 and the memory 1002, and by controlling the operation in the processor 1001, the communication in the communication apparatus 1004, and at least one of the reading or writing of data in the memory 1002 and the storage 1003.

The processor 1001 may control the whole computer by, for example, running an operating system. The processor 1001 may be configured with a central processing unit (CPU), which includes interfaces with peripheral equipment, a control device, a computing apparatus, a register, and so on. For example, the above-described baseband signal processing section 104 (204), call processing section 105 and so on may be implemented by the processor 1001.

Furthermore, the processor 1001 reads programs (program codes), software modules, data, and so on from at least one of the storage 1003 or the communication apparatus 1004 into the memory 1002, and executes various processing according to these. As for the programs, programs to allow computers to execute at least part of the operations of the above-described embodiments may be used. For example, the control section 401 of the user terminal 20 may be implemented by control programs that are stored in the memory 1002 and that operate on the processor 1001, and other functional blocks may be implemented likewise.

The memory 1002 is a computer-readable recording medium, and may be constituted by, for example, at least one of a read only memory (ROM), an erasable programmable ROM (EPROM), an electrically EPROM (EEPROM), a Random Access Memory (RAM) and/or other appropriate storage media. The memory 1002 may be referred to as a "register", a "cache", a "main memory (primary storage apparatus)" and so on. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, and the like), a magnetic stripe, a database, a server, and/or other appropriate storage media. The storage 1003 may be referred to as "secondary storage apparatus".

The communication apparatus 1004 is hardware (transmitting/receiving device) for performing inter-computer communication via at least one of a wired network or a wireless network, and for example, is referred to as "network device", "network controller", "network card", "communication module", and the like. The communication apparatus 1004 may be configured to include a high frequency switch, a duplexer, a filter, a frequency synthesizer and so on in order to implement, for example, at least one of frequency division duplex (FDD) or time division duplex (TDD). For example, the above-described transmitting/receiving antennas 101 (201), amplifying sections 102 (202), transmitting/receiving sections 103 (203), communication path interface 106, and so on may be implemented by the communication apparatus 1004. The transmitting/receiving section 103 may be implemented by physically or logically separating a transmitting section 103a and a receiving section 103b.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these apparatuses, including the processor 1001, the memory 1002, and so on are connected by the bus 1007 so as to communicate information. The bus 1007 may be formed with a single bus, or may be formed with buses that vary between pieces of apparatus.

Also, the base station 10 and the user terminal 20 may be configured to include hardware such as a microprocessor, a digital signal processor (DSP), an application-specific integrated circuit (ASIC), a programmable logic device (PLD), a field programmable gate array (FPGA), and so on, and part or all of the functional blocks may be implemented by the hardware. For example, the processor 1001 may be implemented with at least one of these pieces of hardware.

(Modifications)

Note that the terminology used in the present disclosure and the terminology that is needed to understand the present disclosure may be replaced with other terms that convey the same or similar meanings. For example, at least one of "channels" or "symbols" may be replaced with "signals" (or "signaling"). Also, "signals" may be replaced with "messages". A reference signal can be abbreviated as an "RS", and may be referred to as a "pilot", a "pilot signal" and so on, depending on which standard applies. Furthermore, a "component carrier (CC)" may be referred to as a "cell", a "frequency carrier", a "carrier frequency", and so on.

A radio frame may be formed with one or more durations (frames) in the time domain. Each of one or more periods (frames) constituting a radio frame may be referred to as a "subframe". Furthermore, a subframe may be formed with one or multiple slots in the time domain. A subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame structure, specific filtering processing to be performed by a transceiver in the frequency domain, specific windowing processing to be performed by a transceiver in the time domain, and so on.

A slot may be formed with one or more symbols in the time domain (Orthogonal Frequency Division Multiplexing (OFDM) symbols, Single Carrier Frequency Division Multiple Access (SC-FDMA) symbols, or the like. Also, a slot may be a time unit based on numerology.

A slot may include a plurality of minislots. Each minislot may be formed with one or more symbols in the time domain. Also, a minislot may be referred to as a "subslot". Each minislot may be formed with fewer symbols than a slot. A PDSCH (or PUSCH) transmitted in a time unit larger than a minislot may be referred to as PDSCH (PUSCH) mapping type A. A PDSCH (or PUSCH) transmitted using a minislot may be referred to as "PDSCH (PUSCH) mapping type B".

A radio frame, a subframe, a slot, a minislot, and a symbol all represent the time unit in signal communication. A radio frame, a subframe, a slot, a minislot, and a symbol may be each called by other applicable names. Note that time units such as a frame, a subframe, a slot, a minislot, and a symbol in the present disclosure may be replaced with each other.

For example, one subframe may be referred to as a "transmission time interval (TTI)", or a plurality of consecutive subframes may be referred to as a "TTI", or one slot or mini-slot may be referred to as a "TTI". That is, at least one of a subframe or a TTI may be a subframe (1 ms) in existing LTE, may be a shorter period than 1 ms (for example, one to thirteen symbols), or may be a longer period of time than 1 ms. Note that the unit to represent the TTI may be referred to as a "slot", a "minislot" and so on, instead of a "subframe".

Here, a TTI refers to the minimum time unit of scheduling in radio communication, for example. For example, in LTE systems, the base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks, codewords and so on, or may be the unit of processing in scheduling, link adaptation and so on. Note that when TTI is given, a time interval (for example, the number of symbols) in which the transport blocks, the code blocks, the codewords, and the like are actually mapped may be shorter than TTI.

Note that, when one slot or one minislot is referred to as a "TTI", one or more TTIs (that is, one or more slots or one or more minislots) may be the minimum time unit of scheduling. Also, the number of slots (the number of minislots) to constitute this minimum time unit of scheduling may be controlled.

TTI having a time length of 1 ms may be called usual TTI (TTI in LTE Rel. 8-12), normal TTI, long TTI, a usual subframe, a normal subframe, a long subframe, a slot, or the like. A TTI that is shorter than the usual TTI may be referred to as "shortened TTI", "short TTI", "partial TTI" (or "fractional TTI"), "shortened subframe", "short subframe", "minislot", "sub-slot", "slot", or the like.

Note that a long TTI (for example, a normal TTI, a subframe, and the like) may be replaced with a TTI having a time duration exceeding 1 ms, and a short TTI (for example, a shortened TTI and the like) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be 12, for example. The number of subcarriers included in the RB may be determined based on numerology.

Also, an RB may include one or more symbols in the time domain, and may be one slot, one minislot, one subframe, or one TTI in length. One TTI, one subframe, and the like each may be formed with one or more resource blocks.

Note that one or more RBs may be referred to as a "physical resource block (PRB (Physical RB))", a "subcarrier group (SCG)", a "resource element group (REG)", a "PRB pair", an "RB pair", and so on.

Furthermore, a resource block may be formed with one or more resource elements (REs). For example, one RE may be a radio resource field of one subcarrier and one symbol.

The bandwidth part (BWP) (which may be called partial bandwidth and the like) may represent a subset of consecutive common RB (common resource blocks) for a certain numerology in a certain carrier. Here, the common RB may be specified by the index of the RB based on a common reference point of the carrier. The PRB may be defined in a BWP and numbered within that BWP.

The BWP may include a BWP for UL (UL BWP) and a BWP for DL (DL BWP). For the UE, one or more BWPs may be configured within one carrier.

At least one of the configured BWPs may be active, and the UE does not need to assume to transmit or receive a given signal/channel outside the active BWP. Note that "cell", "carrier", and the like in the present disclosure may be replaced with "BWP".

Note that the configurations of radio frames, subframes, slots, minislots, symbols, and the like described above are merely examples. For example, configurations pertaining to the number of subframes included in a radio frame, the number of slots per subframe or radio frame, the number of minislots included in a slot, the number of symbols and RBs included in a slot or a minislot, the number of subcarriers included in an RB, the number of symbols in a TTI, the symbol duration, the length of cyclic prefixes (CPs) and so on can be variously changed.

Also, the information and parameters described in the present disclosure may be represented in absolute values or in relative values with respect to given values, or may be represented using other applicable information. For example, a radio resource may be specified by a given index.

The names used for parameters and so on in the present disclosure are in no respect limiting. In addition, an equation and so on using these parameters may differ from those explicitly disclosed in the present disclosure. Since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals, and the like described in the present disclosure may be represented by using a variety of different technologies. For example, data, instructions, commands, information, signals, bits, symbols, chips, and the like that may be referenced throughout the above description, may be represented by voltages, currents, electromagnetic waves, magnetic fields or particles, optical fields or photons, or any combination of these.

Also, information, signals, and the like can be output at least either from higher layers to lower layers, or from lower layers to higher layers. Information, signals, and the like may be input and output via a plurality of network nodes.

The information, signals, and so on that are input and/or output may be stored in a specific location (for example, memory), or may be managed in a control table. The information, signals and so on to be input and/or output can be overwritten, updated or appended. The information, signals and so on that are output may be deleted. The information, signals, and so on that are input may be transmitted to other apparatuses.

The reporting of information is by no means limited to the aspects/embodiments described in the present disclosure, and may be performed using other methods. For example, reporting of information may be implemented by using physical layer signaling (for example, downlink control information (DCI), uplink control information (UCI), higher layer signaling (for example, radio resource control (RRC) signaling, broadcast information (the master information block (MIB), system information block (SIB), and so on), medium access control (MAC) signaling, and so on), and other signals and/or combinations of these.

Note that physical layer signaling may be referred to as "L1/L2 (Layer 1/Layer 2) control information (L1/L2 control signals)", "L1 control information (L1 control signal)", or the like. Also, RRC signaling may be referred to as "RRC messages", and can be, for example, an RRC connection setup (RRCConnectionSetup) message, RRC connection reconfiguration (RRCConnectionReconfiguration) message, and so on. Further, MAC signaling may also be reported using, for example, MAC control elements (MAC CEs (Control Elements)).

Further, reporting of given information (for example, reporting of information to effect that "X holds") does not necessarily have to be sent explicitly, and can be sent implicitly (for example, by not reporting this given information, by reporting another information, or the like).

Decisions may be made in values represented by one bit (0 or 1), may be made in Boolean values that represent true or false, or may be made by comparing numerical values (for example, comparison against given value).

Software, whether referred to as "software", "firmware", "middleware", "microcode" or "hardware description language", or called by other names, should be interpreted broadly, to mean instructions, instruction sets, codes, code segments, program codes, programs, subprograms, software modules, applications, software applications, software packages, routines, subroutines, objects, executable files, execution threads, procedures, functions, and the like.

Also, software, commands, information, and the like may be transmitted and received via communication media. For example, when software is transmitted from a website, a server, or other remote sources by using at least one of wired technologies (coaxial cables, optical fiber cables, twisted-pair cables, digital subscriber lines (DSLs), and the like) or wireless technologies (infrared radiation, microwaves, and the like), at least one of these wired technologies or wireless technologies are also included in the definition of communication media.

The terms "system" and "network" as used in the present disclosure are used interchangeably.

In the present disclosure, the terms such as "precoding", "precoder", "weight (precoding weight)", "quasi-co-location (QCL)", "transmission power", "phase rotation", "antenna port", "antenna port group", "layer", "number of layers", "rank", "beam", "beam width", "beam angle", "antenna", "antenna element", and "panel" may be used interchangeably.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" may be used interchangeably. The base station may be called a term such as a macro cell, a small cell, a femto cell, a pico cell, and the like.

A base station can accommodate one or more (for example, three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to all or part of the coverage area of at least one of a base station or a base station subsystem that provides communication services within this coverage.

In the present disclosure, the terms "mobile station (MS)", "user terminal", "user equipment (UE)", "terminal", and the like may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of a base station or a mobile station may be referred to as transmitting apparatus, receiving apparatus, communication apparatus, and so on. Note that at least one of the base station or the mobile station may be a device mounted on a mobile unit, a mobile unit itself, or the like. The moving body may be a transportation (for example, a car, an airplane and so on), an unmanned moving body (for example, a drone, an autonomous car, and so on), or a (manned or unmanned) robot. Note that at least one of the base station or the mobile station also includes a device that does not necessarily move during a communication operation. For example, at least one of the base station or the mobile station may be an IoT (Internet of Things) device such as a sensor.

Furthermore, the base stations in the present disclosure may be replaced with the user terminal. For example, each aspect/embodiment of the present disclosure may be applied to a structure in which communication between the base station and the user terminal is replaced with communication among a plurality of user terminals (which may be referred to as, for example, D2D (Device-to-Device), V2X (Vehicle-to-Everything) and so on). In this case, the user terminal 20 may be configured to have the functions of the base station 10 described above. In addition, the wording such as "up" and "down" may be replaced with the wording corresponding to the terminal-to-terminal communication (for example, "side"). For example, an uplink channel and a downlink channel may be replaced with a side channel.

Likewise, the user terminal in the present disclosure may be replaced with a base station. In this case, the base station 10 may be configured to have the functions of the user terminal 20 described above.

Certain actions that have been described in the present disclosure to be performed by base stations may, in some cases, be performed by their upper nodes. In a network including one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, regarding the methods described in the present disclosure, elements of various steps are presented using an illustrative order, and are not limited to the presented particular order.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New Radio Access Technology (New-RAT), New Radio (NR), New radio access (NX), Future generation radio access (FX), Global System for Mobile communications (GSM; registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and/or next generation systems or the like that are enhanced based on these. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

Reference to elements with designations such as "first", "second", and so on as used in the present disclosure does not generally limit the number/quantity or order of these elements. These designations may be used in the present disclosure only for convenience, as a method for distinguishing between two or more elements. Thus, reference to the first and second elements does not imply that only two elements may be employed, or that the first element must precede the second element in some way.

The terms "judging (determining)" as used in the present disclosure may encompass a wide variety of actions. For example, "judging (determining)" may be regarded as judging, calculating, computing, processing, deriving, investigating, looking up, search, inquiry (for example, looking up in a table, database, or another data structure), ascertaining, and so on.

Furthermore, to "judge (determine)" as used herein may be interpreted to mean making judgements (determinations) related to receiving (for example, receiving information), transmitting (for example, transmitting information), inputting, outputting, accessing (for example, accessing data in a memory), and so on.

In addition, to "judge (determine)" as used herein may be interpreted to mean making judgements (determinations) related to resolving, selecting, choosing, establishing, comparing, and so on. In other words, to "judge (determine)" as used herein may be interpreted to mean making judgements and determinations related to some action.

In addition, to "judge (determine)" as used herein may be replaced with "assuming", "expecting", "considering", and so on.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency, microwave, and optical (both visible and invisible) regions, or the like.

In the present disclosure, the phrase "A and B are different" may mean "A and B are different from each other". Note that the term may mean that "A and B are different from C". The terms such as "leave" "coupled" and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

Now, although the invention according to the present disclosure has been described in detail above, it is obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided for the purpose of exemplification and explanation, and have no limitative meaning to the invention according to the present disclosure.

## Claims

1. A user terminal comprising:

   a transmitting section that performs uplink (UL) transmission using at least one of a first modulation and coding scheme (MCS) table or a second MCS table in which a code rate lower than a minimum code rate specified in the first MCS table is specified; and
   a control section that separately controls transmission conditions for the UL transmission according to a type of an MCS table to be applied.

2. The user terminal according to claim 1, wherein the control section separately accumulates transmission power control commands according to the type of the MCS table to be applied.

3. The user terminal according to claim 1, wherein the control section separately generates a codebook used for transmitting a delivery acknowledgement signal according to the type of the MCS table to be applied.

4. The user terminal according to claim 1, wherein the control section separately controls arrangement of a reference signal according to the type of the MCS table to be applied.

5. The user terminal according to claim 1, wherein the control section selects a resource for an uplink control channel according to the type of the MCS table to be applied.

6. The user terminal according to claim 1, wherein the control section separately controls a number of repetitions of the UL transmission according to the type of the MCS table to be applied.

# FIG. 1A

| MCS Index $I_{MCS}$ | Modulation Order $Q_m$ | Target code Rate $R$ x [1024] | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | reserved | |
| 30 | 4 | reserved | |
| 31 | 6 | reserved | |

# FIG. 1B

| MCS Index $I_{MCS}$ | Modulation Order $Q_m$ | Target code Rate $R$ x [1024] | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 6 | 4 | 434 | 1.6953 |
| 7 | 4 | 490 | 1.9141 |
| 8 | 4 | 553 | 2.1602 |
| 9 | 4 | 616 | 2.4063 |
| 10 | 4 | 658 | 2.5703 |
| 11 | 6 | 466 | 2.7305 |
| 12 | 6 | 517 | 3.0293 |
| 13 | 6 | 567 | 3.3223 |
| 14 | 6 | 616 | 3.6094 |
| 15 | 6 | 666 | 3.9023 |
| 16 | 6 | 719 | 4.2129 |
| 17 | 6 | 772 | 4.5234 |
| 18 | 6 | 822 | 4.8164 |
| 19 | 6 | 873 | 5.1152 |
| 20 | 8 | 682.5 | 5.3320 |
| 21 | 8 | 711 | 5.5547 |
| 22 | 8 | 754 | 5.8906 |
| 23 | 8 | 797 | 6.2266 |
| 24 | 8 | 841 | 6.5703 |
| 25 | 8 | 885 | 6.9141 |
| 26 | 8 | 916.5 | 7.1602 |
| 27 | 8 | 948 | 7.4063 |
| 28 | 2 | reserved | |
| 29 | 4 | reserved | |
| 30 | 6 | reserved | |
| 31 | 8 | reserved | |

FIG. 2

| MCS Index $I_{MCS}$ | Modulation Order $Q_m$ | Target code Rate $R$ x [1024] | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | reserved | |
| 30 | 4 | reserved | |
| 31 | 6 | reserved | |

```
                ┌──────────────┐
                │     BASE     │
                │   STATION    │
                └──────┬───────┘
                       │
                       │    ·NOTIFICATION OF GIVEN MCS TABLE
                       │    ·DCI TO WHICH GIVEN RNTI IS APPLIED
                       │
                       │
                       ▼                    ┌──→ APPLICATION OF FIRST TRANSMISSION/RECEPTION CONDITION/PARAMETER
                ┌──────────────┐           /
                │              │──────────
                │      UE      │          \
                │              │           └──→ APPLICATION OF SECOND TRANSMISSION/RECEPTION CONDITION/PARAMETER
                └──────────────┘
```

FIG. 3

FIG. 4

TO HIGHER STATION APPARATUS 30 OR TO OTHER RADIO BASE STATIONS 10

106
COMMUNICATION PATH INTERFACE

104
BASEBAND SIGNAL PROCESSING SECTION

103
TRANSMITTING /RECEIVING SECTION

102
AMPLIFYING SECTION

105
CALL PROCESSING SECTION

103
TRANSMITTING /RECEIVING SECTION

102
AMPLIFYING SECTION

10

101

101

FIG. 5

FIG. 6

FIG. 7

FIG. 8

EP 3 836 500 A1

10, 20

1001

PROCESSOR

1007

1004

COMMUNICATION APPARATUS

1002

MEMORY

1005

INPUT APPARATUS

1003

STORAGE

1006

OUTPUT APPARATUS

FIG. 9

## INTERNATIONAL SEARCH REPORT

International application No.

PCT/JP2018/030001

### A. CLASSIFICATION OF SUBJECT MATTER
Int. Cl. H04L27/00(2006.01)i, H04W28/18(2009.01)i, H04W52/26(2009.01)i, H04W72/04(2009.01)i

According to International Patent Classification (IPC) or to both national classification and IPC

### B. FIELDS SEARCHED

Minimum documentation searched (classification system followed by classification symbols)
Int. Cl. H04L27/00, H04W28/18, H04W52/26, H04W72/04

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)
IEEE Xplore

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2017-514397 A (QUALCOMM INC.) 01 June 2017, paragraphs [0059]-[0064], [0127], fig. 5A, 5B, 6 & US 2015/0312071 A1, paragraphs [0072]-[0077], [0141], fig. 5A, 5B, 6 & CN 106233649 A & KR 10-2016-0147756 A | 1, 3-6<br>2 |
| Y<br>A | JP 2013-516843 A (QUALCOMM INC.) 13 May 2013, paragraphs [0046]-[0050] & US 2011/0159914 A1, paragraphs [0155]-[0158] & WO 2011/082105 A2 & CN 102783226 A & KR 10-2012-0112679 A | 2<br>1, 3-6 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>10.10.2018 | Date of mailing of the international search report<br>23.10.2018 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010